(19) Europäisches Patentamt
European Patent Office
Office européen des brevets

(11) Publication number : **0 440 406 A2**

# (12) EUROPEAN PATENT APPLICATION

(21) Application number : **91300643.3**

(51) Int. Cl.[5] : **C01G 23/053**

(22) Date of filing : **29.01.91**

(30) Priority : **29.01.90 JP 16161/90**
**12.09.90 JP 239933/90**

(43) Date of publication of application :
**07.08.91 Bulletin 91/32**

(84) Designated Contracting States :
**BE DE ES FR GB IT NL**

(71) Applicant : **Solex Research Corporation of Japan**
**23-9, Maruyama-cho**
**Shibuya-ku Tokyo (JP)**

(72) Inventor : **Watanabe, Morio**
**1-1-11-1250, Takasu-cho**
**Nishinomiya-shi, Hyogo-ken (JP)**

(74) Representative : **Kearney, Kevin David Nicholas et al**
**KILBURN & STRODE 30 John Street**
**London, WC1N 2DD (GB)**

## (54) Process for producing titanium dioxide.

(57) There is disclosed the first step comprising bringing a sulphuric acid solution containing titanium ion together with one or more kinds of metal ions into contact with an organic solvent (a) composed of one or more extractants selected from the group consisting of oxygen-containing extractants and alkylamine extractants diluted with a petroleum hydrocarbon diluent to extract the titanium ion as a sulphuric acid complex from the sulphuric acid solution ; and bringing the organic solvent (a) containing the extracted titanium in a form of a sulphuric acid complex (titanyl sulphate) into contact with an aqueous liquid having been employed for rinsing insoluble titanium hydroxide in the second step and/or an aqueous liquid having been employed for stripping in the third step to strip the titanium in a form of sulphuric acid complex into the aqueous liquid and to regenerate the organic solvent (a) for recycling for extraction, the second step comprising treating the aqueous liquid containing the titanium in a form of sulphuric acid complex stripped from the organic solvent (a) for hydrolysis to form insoluble titanium hydroxide ; and washing the titanium hydroxide with dilute sulphuric acid and/or clear water, and the third step comprising bringing a part or whole of raffinate of extraction in the first step into contact with an organic solvent (b) composed of an extractant selected from the group consisting of oxygen-containing extractants and alkylamine extractants diluted with a petroleum hydrocarbon diluent to extract the titanium ion as a sulphuric acid complex from the raffinate ; and bringing the organic solvent (b) containing extracted titanium in a form of sulphuric acid complex into contact with water, dilute sulphuric acid solution or a dilute titanyl sulphate solution to strip the titanium in a form of sulphuric acid complex to regenerate the organic solvent (b) for recycling the extraction.

EP 0 440 406 A2

# PROCESS FOR PRODUCING TITANIUM DIOXIDE

## BACKGROUND OF THE INVENTION

### Field of the Invention

The present invention relates to a sulphuric acid process for producing titanium dioxide, which discharges no industrial waste.

### Related Background Art

In a production of titanium dioxide by a conventional sulphuric acid process, a titanium-iron containing substance like a titanium-iron ore (e.g. ilmenite and anatase) or titanium slag is reacted with sulphuric acid at an elevated temperature to produce a titanyl-sulphate-containing solid product composed mainly of titanyl sulphate, ferrous sulphate and ferric sulphate, and additionally of magnesium sulphate, manganese sulphate, chromium sulphate, vanadium sulphate, aluminium sulphate, sulphates of other elements, and unreacted substances. The sulphated solid product is dissolved in water, dilute sulphuric acid or a sulphate-salt-containing solution. In the dissolution, the molar ratio of sulphuric acid to titanium dioxide (hereinafter the ratio being referred to as an "acid value") have to be controlled to be not higher than 2.3 in order to precipitate the titanium ion in the solution by hydrolysis as insoluble titanium hydroxide. Accordingly, the concentration of the free sulphuric acid to promote dissolution of the solid reaction product cannot be raised beyond certain limits. Further in the process, in order to reduce the amount of iron co-precipitated by hydrolysis, a reducing agent such as iron scrap is added to the solution to convert ferric sulphate therein to ferrous sulphate. After the reduction, crystalline ferrous sulphate ($FeSO_4.7H_2O$) is deposited by cooling the solution to decrease the iron content in the solution and to produce a titanium-iron solution containing titanyl sulphate and variety of metal ions.

In conventional processes, the sulphate solution containing mainly titanyl-iron sulphate is added to a boiling dilute titanyl sulphate solution, thereto seeds for promoting formation of titanium hydroxide and subsequently boiling water being added to form insoluble titanium hydroxide. The resulting titanium hydroxide is separated from the liquid by filtration.

The separated titanium hydroxide, which contains adsorbed hydroxides of iron, manganese, vanadium, chromium, etc. contained in the raw material, is carefully rinsed repeatedly with a dilute sulphuric acid solution to remove other coexisting metals, and is subsequently rinsed with water to remove the adhered sulphuric acid. The titanium hydroxide is dehydrated and oxidised at an elevated temperature to give titanium dioxide.

Such a conventional process is disadvantageous in that the yield of the insoluble titanium hydroxide by hydrolysis is approximately from 94% to 95%, and the rest of the titanium is discarded as $TiO_2$ at a concentration of from about 6 to about 9 g/l in the solution after the hydrolysis. The process is also disadvantageous in that minute amounts of scarce metals contained in the raw material such as titanium-iron ore and titanium slag are naturally not recovered and are discarded with the waste sulphuric acid after the hydrolysis. Even when the waste sulphuric acid is neutralised, the titanium dioxide and other metals in the waste sulphuric acid are similarly discarded disadvantageously. Further, titanium dioxide as well as other metals contained in the dilute sulphuric acid used for rinsing of the insoluble titanium hydroxide cannot be recovered efficiently and economically. Therefore such a dilute sulphuric acid solution is discarded without being recovered, since evaporation concentration thereof is costly, and this causes global oceanic pollution.

If the waste acid and the acidic washing solution or water washing solution used for the titanium hydroxide is neutralised by use of calcium hydroxide which is an inexpensive alkali, it produces disadvantageously wet gypsum in an amount of 20 to 25 tons per ton of produced titanium dioxide, which costs a great deal in treating the large amount of the waste and difficulty in finding a site for discarding it. Accordingly, the sulphuric acid process for manufacturing titanium dioxide, which produces a large amount of waste, has been destined to decline inspite of its many advantages.

For improvement of the conventional processes, methods for extracting titanyl sulphate from a sulphuric acid solution thereof are disclosed in U.S. Patent 4,499,058 and U.S. Patent 4,734,271.

In the method disclosed in U.S. Patent 4,499,058, insoluble titanium hydroxide is first formed from titanyl-iron sulphate solution by a conventional hydrolysis ; the resulting titanium hydroxide is separated by filtration; the filtrate after the hydrolysis is concentrated by evaporation to a concentration of total sulphuric acid concentration of 500 g/l or more ; and subsequently most of the sulphuric acid and the titanyl sulphate in the aqueous solution is extracted by use of a phosphorus type organic solvent ; whereby titanium dioxide is recovered and the cost of treating the waste sulphuric acid is reduced. This method, however, has many disadvantages as

set out below which prevent the commercialisation of the method.

(1) The sulphuric acid having been extracted for the purpose of reducing the neutralisation cost is stripped and transferred into an aqueous solution in the subsequent stripping stage, giving a high molar ratio of titanium dioxide to sulphuric acid (referred to as an "acid value" in this specification) in the recovered titanyl sulphate-containing solution, which prevents formation of insoluble titanium hydroxide by hydrolysis.

(2) The need for a large amount of extracting agent to combine with the sulphuric acid to be extracted necessitates use of a large amount of organic solvent and a large amount of circulating organic solvent, which results in a heavy equipment investment.

(3) Need for a high concentration of the phosphorus type extracting agent in the organic solution results in a high viscosity of the organic solvent, and the evaporation-concentrated waste sulphuric acid having a concentration of 500 g/l or more is in a state of viscous syrup, so that the extraction apparatus have to be operated at a heated state.

(4) A large amount of water is used for regeneration of the organic solvent owing to a large amount of sulphuric acid extracted together with titanyl sulphate, recovering a dilute titanyl sulphate solution which cannot be utilised further in view of water balance.

(5) Metals other than titanium, such as zinc, niobium, chromium, vanadium, aluminium, magnesium, manganese, and iron, cannot economically be recovered from the waste sulphuric acid solution after formation of insoluble titanium hydroxide, so that the amount of wasted matter cannot be reduced.

(6) The dilute sulphuric acid-rinsing solution and the rinsing water after use for rinsing of the insoluble titanium hydroxide formed by hydrolysis is not reusable, which prevents the reduction of neutralisation cost and concentration cost.

In the method disclosed the aforementioned U.S. Patent 4,734,271, sulphated starting material is dissolved in a sulphate salt-containing solution ; iron scrap is added thereto to convert contained ferric sulphate to ferrous sulphate ; the titanyl sulphate is extracted with a phosphorus type extracting agent from the sulphuric acid solution to separate other coexisting metal ions ; subsequently iron is removed therefrom ; and the titanyl sulphate is hydrolyzed. This method involves the same problems as the method of U.S. Patent 4,499,058 in that the region of extraction of titanyl sulphate is large, and separately concentrated sulphuric acid is required additionally. In the former patent, the solution to be treated is firstly concentrated to raise the total sulphuric acid concentration and subsequently treated for extraction while in the latter patent, separately concentrated sulphuric acid is brought into contact with the circulating organic solvent prior to and midway through the extraction of the titanyl sulphate, and the concentration is conducted with the solution after hydrolysis which is the same as in U.S. Patent 4,499,058.

Moreover, the method disclosed in U.S. Patent 4,734,271 is disadvantageous because of the points set out below.

(i) The sulphuric acid concentration in the treated solution decreases as the extraction of titanyl sulphate proceeds, which will hinder the extraction of the titanyl sulphate. For compensation thereof, the organic solvent has to be brought into contact a plurality of times with a 40-90% sulphuric acid solution, which render the process complicated.

(ii) The molar ratio of the titanium oxide to be extracted into the organic solvent to the sulphuric acid is controlled by an aqueous solution brought into contact in a stripping stage, which requires skill in process operation, as well as careful control of concentrations of titanium dioxide and sulphuric acid of the washing solution.

(iii) With the decrease of the titanium concentration in the treated solution, the amount of extracted impurity metal ions increases. Therefore, the impurity metal ion concentration in the treating solution cannot be raised, in order to conduct extraction of the titanyl sulphate completely.

(iv) With the decrease of the titanium concentration in the treated solution, the amount of co-extracted sulphuric acid will remarkably increase, and a large amount of washing solution is required for removing the co-extracted sulphuric acid. Therefore, the concentration of the impurity metal ions in the solution after the extraction cannot be raised, in order to conduct extraction of the titanyl sulphate completely.

(v) With the progress of the extraction of titanyl sulphate, the sulphuric acid concentration in the treated solution decreases, which causes crystallisation of ferrous sulphate ($FeSO_4.7H_2O$) in the apparatus. Therefore, a crystallisation apparatus for the ferrous sulphate have to be equipped in the extraction apparatus, which render the extraction apparatus complicated.

(vi) The titanium ion remaining in the solution after the hydrolysis is not directly recoverable, which requires to conduct the same concentration treatment as described in the U.S. Patent 4,499,058.

(vii) In conducting the titanium recovery operation described in above Item (vi), the contact of circulating organic solvent with sulphuric acid may cause contamination of titanium by a coloured metal ion such as of chromium, vanadium, manganese, and iron.

(viii) The method does not allow to recover economically all the metals other than titanium contained in the starting material, so that the discharge of noxious industrial waste cannot completely be prevented.

## SUMMARY OF THE INVENTION

The present invention intends to provide an improved method for producing titanium dioxide by a sulphuric acid process, which is free from the aforementioned disadvantages involved in the prior art.

The present invention provides a process for producing titanium dioxide which does not discharge a waste, the process comprising a first, a second, and a third step combinedly :

the first step comprising bringing a sulphuric acid solution containing titanium ion together with one or more kinds of metal ions into contact with an organic solvent (a) composed of one or more extractants selected from the group consisting of oxygen-containing extractants and alkylamine extractants and a petroleum hydrocarbon diluent to extract the titanium ion as a sulphuric acid complex (titanyl sulphate) from the sulphuric acid solution to produce the organic solvent (a) containing titanium ion as a sulphuric acid complex (the extractant mixture) and the sulphuric acid solution from which titanium ion has been extracted (the raffinate) ; and bringing the organic solvent (a) containing the extracted titanium in a form of a sulphuric acid complex into contact with an aqueous liquid (which may be water or an aqueous liquid which has been employed for rinsing insoluble titanium hydroxide formed in the second step or an aqueous liquid having been employed for stripping in the third step or mixtures thereof) to strip the titanium in the form of sulphuric acid complex into the aqueous liquid and to regenerate the organic solvent (a) for recycling for extraction,

the second step of treating the aqueous liquid containing the titanium in a form of sulphuric acid complex stripped from the organic solvent (a) to hydrolysis to form insoluble titanium hydroxide ; and washing the titanium hydroxide with dilute sulphuric acid and or clear water, and

the third step of bringing a part or whole of the raffinate from the first step into contact with an organic solvent (b) composed of an extractant selected from the group consisting of oxygen-containing extractants and alkylamine extractants and a petroleum hydrocarbon diluent to extract the titanium ion as a sulphuric acid complex from the raffinate ; and bringing the organic solvent (b) containing extracted titanium in a form of sulphuric acid complex into contact with an aqueous liquid (which may be water, dilute sulphuric acid solution or a dilute titanyl sulphate solution) to strip the titanium in a form of sulphuric acid complex into the aqueous liquid and to regenerate the organic solvent (b) for recycling to extraction.

## BRIEF DESCRIPTION OF THE DRAWINGS

The invention may be put into practice in various ways and a number of specific embodiments will be described by way of example to illustrate the invention with reference to the accompanying drawings and examples but without limitation thereto. In the drawings :

Figure 1 is a flow sheet illustrating a first embodiment, which is a basic type of operation, of the present invention ;

Figure 2 is a flow sheet of a modification of the process of Figure 1 comprising treatment of the liquid which has been employed for washing of the insoluble titanium hydroxide formed in the second step in addition to the process of Figure 1 ;

Figure 3 is a flow sheet of a further modification of the process of Figure 1 comprising, in addition to the process of Figure 2, a fourth step in which the solution after hydrolysis is treated to convert all the titanium extracted and recovered in the third and the fourth steps into insoluble titanium hydroxide ;

Figure 4 is a flow sheet of a modification of the process shown in Figure 3 comprising additionally mixing the raffinate of the extraction of the first step with a chloride, extracting the titanium as a chloride complex, and converting it into titanyl chloride ;

Figure 5 is a flow sheet of a modification of the process shown in Figure 4 similar to the process of Figure 4, but comprising a scrubbing treatment for removing chlorine and a chloride complex in the organic phase prior to chloride and recycling all the titanyl sulphate recovered in the third step and the fourth step ;

Figure 6 is a flow sheet of a modification of the process shown in Figure 2 similar in principle to that of Figure 2, but comprising recycling the raffinate of extraction of the first step to the starting material, and increasing the concentration of zirconium, niobium, chromium, vanadium, manganese, aluminium, magnesium, zinc etc. contained in the starting material in a minute amount in the raffinate of the extraction of the third step to the economically recoverable level ;

Figure 7 is a flow sheet of a modification of the process shown in Figures 1, 5 and 6 comprising, in addition to the process of Figure 6, introducing the raffinate of the fourth step to evaporation condensation step to recover concentrated sulphuric acid, and introducing the raffinate of the third step to an anion dialysis membrane apparatus to recover free sulphuric acid from the raffinate of the third step ;
Figure 8 is a flow sheet of a modification of the process shown in Figure 5 comprising, in addition to the process of Figure 7, adding concentrated sulphuric acid to the solution after hydrolysis transferred to the fourth step and introducing it to an extraction stage ;
Figure 9 is a flow sheet of a modification of the process shown in Figure 8 comprising, in addition to the process of Figure 8, introducing ferrous sulphate derived in a crystallisation stage S into a recrystallisation stage S', dissolving it in a liquid (j)' which has been employed for washing in the titanium washing stage G to obtain a recrystallised product T, and introducing the mother liquor of the crystallisation before the extraction stage of the third step.

DETAILED DESCRIPTION OF THE PREFERRED EMBODIMENT

The disadvantages of the prior art can be cancelled by combining systematically the three steps of the process described in the above Summary of the Present Invention to produce titanium dioxide, by which a high concentration of sulphate salt solution that allows economical recovery of various metals coexisting with titanium ion is derived and simultaneously insoluble titanium hydroxide is produced in high purity, and calcining the resulting titanium hydroxide into titanium dioxide.

Furthermore, combination of a fourth step with the above three steps enables the creation of a closed system which discharges no waste acid.

In the first step of the process, titanium-iron ore (ilmenite and anatase), titanium slag, or titanium-containing industrial waste is treated with sulphuric acid to prepare a solid sulphation reaction product. The solid product is dissolved in a sulphate-containing solution. The resulting sulphuric acid solution is cooled to remove the iron ion as crystalline ferrous sulphate ($FeSO_4.7H_2O$). Subsequently the titanium is extracted from the sulphuric acid solution in a form of a sulphuric acid complex by bringing the sulphuric acid solution into contact with an organic solvent (a) composed of one or more extractants selected from the group consisting of oxygen-containing extractants and alkylamine extractants and a petroleum hydrocarbon diluent. Subsequently, the organic solvent (a) containing the extracted titanium in a form of a sulphuric acid complex is brought into contact with the rinsing liquid having been employed for rinsing the insoluble titanium hydroxide formed in the second step and/or a stripping liquid employed for stripping in the third step and the fourth step to strip (or inversely extract) the titanium sulphuric acid complex from the organic solvent (a) to the aqueous solution and to regenerate the organic solvent (a) to be recycled for extraction.

In the second step of the process, the aqueous solution containing the titanium sulphuric acid complex stripped from the organic solvent (a) is introduced to a hydrolysis stage to form insoluble titanium hydroxide according to a known hydrolysis method. The resulting insoluble titanium hydroxide is separated by filtration and is rinsed with dilute sulphuric acid and/or water.

The raffinate of the extraction of the first step, which contains a variety of metal ions in addition to the titanium ion, is recycled to the stage where a raw material such as titanium-iron ore and titanium slag, and 85-95% sulphuric acid are reacted at an elevated temperature of from 150 to 250°C and aged for a sufficient time, the resulting sulphation product being dissolved in order to raise the concentration of titanium as well as of other metals such as iron, manganese, chromium, vanadium, niobium, zirconium, aluminium, magnesium, zinc, nickel, and cobalt for the purpose of recovering the metals economically. When the concentration of the metal ions in the extraction raffinate has become sufficiently high, a portion thereof is introduced to the third step of the process.

In the third step of the process, the introduced raffinate is brought into contact with an organic solvent (b) composed of an extractant selected from the group consisting of oxygen-containing extractants and alkylamine extractants and a petroleum hydrocarbon diluent to extract the titanium ion as a sulphuric acid complex from the raffinate into the organic solvent (b). Subsequently, the organic solvent (b) containing extracted titanium in the form of sulphuric acid complex is brought into contact with water, dilute sulphuric acid solution and/or the rinsing liquid which has been used for rinsing the insoluble titanium hydroxide to strip the titanium as a sulphuric acid complex and to regenerate the organic solvent (b) to be recycled for extraction.

By combining the above described three steps of the process, a metal sulphate-containing solution is derived which contains metals other than titanium at concentrations sufficient for economical recovery thereof from titanium-iron ore, titanium slag, and/or titanium-containing industrial waste. Titanium dioxide is produced by calcining the insoluble titanium hydroxide derived in the second step. Thus the disadvantages of the prior art are cancelled.

In the fourth step of the process, the hydrolyzed solution from which insoluble titanium hydroxide has been separated is brought into contact with an organic solvent (c) composed of an extractant selected from the group consisting of oxygen-containing extractants and alkylamine extractants and a petroleum hydrocarbon diluent

to extract the titanium ion a sulphuric acid complex from the raffinate into the organic solvent (c). Subsequently, the organic solvent (c) containing extracted titanium in the form of sulphuric acid complex is brought into contact with water, dilute sulphuric acid solution and/or the rinsing liquid which has been used for rinsing the insoluble titanium hydroxide to strip the titanium as a sulphuric acid complex into the aqueous solution and to regenerate the organic solvent (c).

The raffinate of extraction in the fourth step is treated by evaporation concentration according to a conventional method to increase the concentration of sulphuric acid, which is recycled for sulphation of a starting material such as titanium-iron ore, titanium slag, titanium-containing industrial waste. The amount of the recovery of sulphuric acid is thus increased, so that the consumption of the sulphuric acid is decreased to 1/10 or less in comparison with conventional methods.

By the combination of the above four steps of the process for producing titanium dioxide, the titanium, the sulphuric acid, and the washing solution are all reusable.

In another process of the present invention, at least one of chlorine compounds of hydrogen, sodium, ammonium, magnesium, potassium, iron, and titanium is added to the raffinate of extraction of the first step. The mixture is introduced to the third step and is brought into contact with the organic solvent (b) composed of one or more extractants selected from the group consisting of oxygen-containing extractants and alkylamine extractants and a petroleum hydrocarbon diluent to extract the titanium ion as a chloride complex and a sulphuric acid complex from the extraction raffinate ; and the organic solvent (b) is brought into contact with a titanyl sulphate-containing solution or the extraction raffinate of the first step before the chloride mixing to selectively strip the chloride complex and the chloride ion selectively into the aqueous solution, and the organic solvent (b) is further brought into contact with water, dilute sulphuric acid solution and/or a rinsing solution having been used for rinsing insoluble titanium hydroxide formed in the second step in order to strip the titanium-sulphuric acid complex from the organic solvent (b) into the aqueous solution and to regenerate the organic solvent (b).

The stripping solutions containing titanyl sulphate derived in the third step and the fourth step are introduced to the scrubbing stage of the first step and are brought into contact with the organic solvent (a) to selectively remove impurity metal ions co-extracted with the titanium-sulphuric acid complex from the organic solvent (a), giving a high purity of the insoluble titanium hydroxide in the second step. This titanium hydroxide is calcined into titanium dioxide. Thus the disadvantages of the prior art are cancelled.

In still another process, the stripping solutions containing titanyl sulphate derived in the third step and the fourth step are introduced to the stripping stage of the first step, and are brought into contact with the organic solvent (a) to strip the titanium-sulphuric acid complex from the organic solvent (a) to the aqueous solution and to regenerate the organic solvent (a). The titanium-sulphuric acid complex stripped as above from the organic solvent (a) to the aqueous solution is introduced to the second step and hydrolyzed into insoluble titanium hydroxide, which is separated by filtration and rinsed with dilute sulphuric acid and/or water, and then calcined into titanium dioxide. Thus the disadvantages of the prior art are cancelled.

Further, the raffinate of extraction of the third step is introduced into a chamber of a membrane separation apparatus having chambers partitioned by an anion-selective dialysis membrane with introduction of clear water into another chamber to recover free sulphuric acid by utilising the difference of sulphuric acid concentration between the two chambers. The recovered sulphuric acid is recycled to a suitable stage in the first to fourth steps or the evaporation-concentration stage of the fourth step. Thereby the required amount of the sulphuric acid for production of titanium dioxide is further reduced.

In the production method of the present invention, the amount of the discharged waste sulphuric acid is decreased to 1/20 to 1/50th that of the conventional method, and furthermore the sulphuric acid contains valuable non-ferrous metals which are useful as a raw material of the metals, and may particularly be important as a source for scarce metals.

As described above, the present invention provides a process for producing titanium dioxide by a sulphuric acid process which does not discharge waste and is economical by improving conventional sulphuric acid processes which discharges a large amount of industrial waste.

The raw material in the present invention is not limited at all, and includes a variety of materials such as naturally occurring titanium-iron ore (ilmenite and anatase), artificial titanium concentrate such as titanium slag, industrial wastes containing a large amount of coexisting metals other than titanium, and the like.

In conventional processes for titanium dioxide production, a starting material is pulverised into fine powder and mixed and stirred with concentrated sulphuric acid to allow temperature rise and ageing. The material is then dissolved in a sulphate-salt-containing solution in a leaching stage. In the dissolution in conventional processes, the ratio of the titanium dioxide and the sulphuric acid have to be carefully adjusted so as to give the acid value suitable for formation of insoluble titanium hydroxide by hydrolysis.

In the titanium dioxide production of the present invention, however, the titanium concentration as well as ion concentrations of metals other than titanium, and the acid value need not be adjusted. Furthermore, in conventional processes, ferric sulphate in the solution has to be reduced to ferrous sulphate by addition of iron scrap or the like, while in the present invention the ferric sulphate is not necessarily required to be reduced to ferrous sulphate.

Further, the raffinate of extraction in the first step is mostly recycled for use for dissolving the raw material, so that the solution of the raw material comes to contain considerably high concentrations of ions of manganese, vanadium, chromium, aluminium, magnesium, zirconium, niobium, zinc and iron which are contained in the raw material. The iron ion, which can be removed by cooling the sulphuric acid solution as crystalline ferrous sulphate ($FeSO_4.7H_2O$), may be lowered to an iron concentration level corresponding to the cooling temperature, while the other metal ions can be concentrated to levels of 20 to 50 times that of the solution derived in conventional methods. Accordingly, the solution can be a valuable source of metals. Thus the present invention provides a titanium production process which does not discharge generally considered industrial waste.

Furthermore, the scarce metals contained in minute amounts in the raw materials are expensive ones, so that the recovery of the valuable metals serves to reduce greatly the production cost of titanium dioxide.

The object of the present invention is achieved by utilisation of characteristics of two kinds of organic solvents (a) and (b), or three kinds of organic solvents (a), (b), and (c). U.S. Patents 4,499,058 and 4,734,271, noticing the considerable change of state of titanium- containing sulphuric acid solution during the production of titanium dioxide by a sulphuric acid, disclose selective use of organic solvents having characteristics suitable for the state of the treated solution and the object of the treatment, where one kind of organic solvent is employed and the treated solution is adjusted to meet the characteristics of the organic solvent used : for example, the treated solution is concentrated or the treated solution is brought into contact with 40%-90% sulphuric acid solution before extraction or between extraction stages.

On the contrary in the present invention, the state of a treated solution is not changed, but a suitable organic solvent is provided by employing one or more extractants selected from the group of oxygen-containing extractants and alkylamine extractants, and a petroleum hydrocarbon diluent. The concentration of the extractant in the solvent is decided by testing innumerable extractants individually so as to undergo the reactions shown by the formulas (1) to (17).

The extracting organic solvent employed in the extraction stage of the first step (i.e. solvent (a)) is required to be chemically stable because it is brought into contact with a high concentration of sulphuric acid, and is additionally required to be suitable for the reactions shown below. (In the formulas, the symbol "Org" denotes an extractant molecule, and the symbol "Me" denotes a metal other than titanium.)

$$TiOSO_4+H_2SO_4+MeSO_4+Org \rightarrow TiOSO_4.Org+MeSO_4+H_2SO_4 \quad (1)$$

$$TiOSO_4+H_2SO_4+MeSO_4+2Org \rightarrow H_2TiO(SO_4)_2.2Org+MeSO_4 \quad (2)$$

$$TiOSO_4+H_2SO_4+MeSO_4+Org \rightarrow H_2SO_4.Org+TiOSO_4+MeSO_4 \quad (3)$$

$$TiOSO_4+H_2SO_4+MeSO_4+H_2SO_4.Org \rightarrow TiOSO_4.Org+2H_2SO_4+MeSO_4 \quad (4)$$

$$TiOSO_4+H_2SO_4+MeSO_4+H_2TiO(SO_4)_2.2Org \rightarrow 2TiOSO_4.Org+2H_2SO_4+MeSO_4 \quad (5)$$

In the extraction stage of the first step, the organic solvent is required to have ability of selectively separating $TiOSO_4$ from an aqueous solution at high concentrations of $MeSO_4$ and $H_2SO_4$.

At the extraction stage of the third step, the organic solvent (i.e. solvent (b)) is required to be suitable for the reactions below.

$$TiOCl_2+TiOSO_4+H_2SO_4+MeSO_4+2Org \rightarrow TiOCl_2.Org+TiOSO_4.Org+H_2SO_4+MeSO_4 \quad (6)$$

$$TiOSO_4+MeCl_2+H_2SO_4+MeSO_4+Org \rightarrow TiOCl_2.Org+MeSO_4+H_2SO_4 \quad (7)$$

At the extraction stage of the third step, the concentration of $H_2SO_4$ is slightly lower and the concentration of $TiOSO_4$ itself is also lower. As the extraction of $TiOSO_4$ proceeds, the concentration of $H_2SO_4$ decreases, which causes deposition of $FeSO_4.H_2O$ as described in U.S. Patent 4,734,271, which suppresses the reaction of the formulas (2) and (3). Accordingly, the organic solvent is required to be suitable for the extraction according to the formulas (8) to (11).

$$MeCl_2.Org+TiOSO_4+2H_2SO_4 \rightarrow H_2TiO(SO_4)_2.Org+MeSO_4+2HCl \quad (8)$$

$$MeCl_2.Org+TiOSO_4+H_2SO_4 \rightarrow TiOSO_4.Org+MeCl_2+H_2SO_4 \quad (9)$$

$$TiOCl_2.Org+H_2SO_4 \rightarrow TiOSO_4.Org+2HCl \quad (10)$$

$$H_2TiO(SO_4)_2.2Org+MeCl_2 \rightarrow 2TiOSO_4.Org+MeSO_4+2HCl \quad (11)$$

For stripping the extracted $TiOSO_4$ from the organic solvent, the reactions of the formulas (12) to (15) need to proceed.

$$2TiOSO_4.Org+dil.H_2SO_4 \rightarrow TiOSO_4+TiOSO_4.Org+H_2SO_4 \quad (12)$$

$$2TiOSO_4.Org+dil.H_2SO_4 \rightarrow 2TiOSO_4+H_2SO_4.Org+Org \quad (13)$$
$$2H_2TiO(SO_4)_2.Org+Water \rightarrow 2TiOSO_4+2H_2SO_4.Org \quad (14)$$
$$TiOSO_4.Org+Water \rightarrow TiOSO_4+Org \quad (15)$$

In the washing stages of the first step and the third step, the reactions of the formulas (16) and (17) need to proceed.

$$MeSO_4.Org + TiOSO_4 \rightarrow TiOSO_4.Org + MeSO_4 \quad (16)$$
$$H_2SO_4.Org + TiOSO_4 \rightarrow TiOSO_4.Org + H_2SO_4 \quad (17)$$

The present invention utilises, in two or more stages, the above characteristics suitable for the extraction reactions to produce titanium dioxide in high purity from titanium-iron ore, titanium slag, and/or a titanium-containing industrial waste.

The extraction characteristics and stripping characteristics shown by the formulas (1) to (17) cannot be achieved economically by use of a single extractant.

The present invention utilises, as the result of study on the properties of extractants, synergistic effect of two or more extractants in mixture to achieve a considerable economical advantage. Further, the present invention avoids the difficulty of treating the change of extraction conditions corresponding to the change of the chemical composition of the treated solution at one extraction stage in conventional processes.

As described above, the present invention provides a process for producing titanium dioxide which cancels all the disadvantages of the conventional processes, enabling economical recovery of all metals contained in raw materials without discharging industrial waste.

The oxygen-containing extractant in the present invention is selected from the groups below :

(a) Amides :

```
R-C-NH2,   R-N--C-CH3,   and   R-N--C-CH2-C--N-R,
  "          |  "                |  "      "  |
  O          R' O                R' O      O  R"
```

wherein R, R', and R" represent respectively an alkyl radical or an aryl radical having 4 to 22 carbons, including cases where R=R'=R", R=R'≠R", or R≠R'≠R", or alkyl and aryl radicals are mixedly employed.

(b) Ketones :

(R)(R')C=O

Either an aliphatic ketone or an aromatic ketone may be employed. Either a simple ketone or a mixed ketone may be employed. In the formula, R and R' represent an alkyl radical or an aryl radical having 8 to 24 carbons.

(c) Alcohols :

Primary, secondary, and tertiary alcohol having 8 to 18 carbon atoms.

(d) Esters :

```
    O            O            O              O
    "            "            "              "
R1O-P-OR3,   R1O-P-R3,    R1O-P-R3,   and R1-P-R3
    |            |            |              |
    OR2          OR2          R2             R2
```

wherein $R^1$, $R^2$, and $R^3$ represent alkyl radicals and aryl radicals having 4 to 18 carbons, including cases where the alkyl radicals or the aryl radicals differ from each other or alkyl and aryl radicals are mixedly employed, namely the cases of $R^1=R^2=R^3$, $R^1=R^2\neq R^3$, or $R^1\neq R^2\neq R^3$.

The alkyl amines and alkyl aryl amines employed in the present invention are selected from the groups below :

(a) Primary amines :

A primary amine represented by $RNH^2$ where R is an alkyl or aryl radical having 4 to 24 carbons.

(b) Secondary amines :

A secondary amine represented by $R^2NH$ where R is an alkyl or aryl radical having 4 to 24 carbons.

Petroleum hydrocarbons used for dilution of the extractant in the present invention include aromatic hydrocarbons, aliphatic hydrocarbons and mixtures thereof. A mixture of various hydrocarbons like kerosine is frequently used.

The extractant in the present invention is preferably employed at a concentration within the range of from 5% to 80% depending on the concentration of titanium, the concentration of sulphate, and the kind and the concentration of the impurity metal ions.

The anion-selective dialysis membrane utilised for recovery of sulphuric acid from the extraction raffinate of the third step includes microporous membranes of tetrafluoroethylene and polyethylene, and those of styrenedivinylbenzene copolymer. For example, Selemion AMV, DMV (trade name, made by Asahi Glass Co., Ltd.), Aciplex A-101 (trade name, made by Asahi Chemical Industry Co., Ltd.), AVS-4T, and ACH-45T (trade name, made by Tokuyama Soda Co., Ltd.), and other anion-selective dialysis membrane exhibiting similar performance thereto are all useful for this purpose.

In the present invention, the raffinate of extraction of the fourth step is concentrated and used for sulphation (or solid digestion) of the raw material such as titanium-iron ore, titanium slag, and/or a titanium-containing industrial waste. The raffinate, which contains little metal ions, may be concentrated by means of an apparatus such as a conventional evaporation-condensation apparatus or a less energy-consuming multiple-effect evaporator without discharging a concentrated metal sulphate solution from the bottom of the apparatus during the concentration. This is a great difference from the methods disclosed in U.S. Patents 4,499,058 and 4,734,271.

Embodiments of the present invention are now explained below in more detail with reference to the drawings.

Figure 1 is a flow sheet illustrating a basic type of operation of the present invention.

In the first step, a titanyl sulphate-containing liquid A, which contains impurity metal ions, is introduced to the extraction stage B of the first step, where the titanium ion in the sulphuric acid solution is extracted by contact with an organic solvent (a) composed of one or more extractants selected from the group of oxygen-containing extractants and alkylamine extractants and a petroleum hydrocarbon diluent into the organic phase (a) as a sulphuric acid complex. The organic solvent (a) containing the extracted titanium-sulphuric acid complex is introduced to a stripping stage C, where the organic solvent (a) is brought into contact with water or dilute sulphuric acid (d) or dilute titanyl sulphate-containing solution (f′) to strip the titanium-sulphuric acid complex from the organic solvent (a) to an aqueous solution (d′) and to regenerate the organic solvent (a) and to be recycled to the extraction stage.

The aqueous solution (d′) containing titanium-sulphuric acid complex transferred to the aqueous solution in the stripping stage C of the first step is introduced to a hydrolysis stage F of the second step, where the titanium-sulphuric acid complex is hydrolyzed to give insoluble titanium hydroxide and a filtrate (h). The titanium hydroxide is calcined to produce titanium dioxide H.

The raffinate of extraction of the first step (e) and (e′), (i.e. the original liquid A after contact with the solvent (a)) which still contains titanium ion, is introduced partly or wholly to an extraction stage D in a third step, where the raffinate is brought into contact with an organic solvent (b) composed of one or more extractants selected from the group of oxygen- containing extractants and alkylamine extractants and a petroleum hydrocarbon diluent to extract the titanium ion as a sulphuric acid complex, giving extraction raffinate (g) (i.e. the original liquid A after being contacted with solvent (a) and then solvent (b)). The organic solvent (b) containing the extracted titanium is introduced to a stripping stage E, where the organic solvent is brought into contact with water, dilute sulphuric acid or dilute titanyl sulphate solution (f) to transfer the titanium-sulphuric acid complex from the organic solvent to aqueous solution (f)′ and to regenerate the organic solvent (b).

The solution (f)′ leaving the stripping stage is employed as the stripping solution of the first step, or employed for scrubbing. Thus the titanium in the aqueous solution is introduced to the hydrolysis stage F of the second step.

The flow sheet of Figure 2 is basically the same as that of Figure 1, but a rinsing stage G is added where the insoluble titanium hydroxide formed in the hydrolysis stage of the second step is rinsed with water (j), and the rinsing liquid (j)′ leaving the rinsing stage is employed for stripping of the titanium-sulphuric acid complex extracted into the organic solvent (a) in the stripping stage of the first step.

The flow sheet of Figure 3 is basically the same as those of Figure 1 and Figure 2. In Figure 3, however, the sulphuric acid solution (h) separated from the insoluble titanium hydroxide formed by a known hydrolysis method in the second step is introduced to a fourth step, where the sulphuric acid solution is brought into contact in an extraction stage J with an organic solvent (c) composed of one or more extractants selected from oxygen-containing extractants and alkylamine extractants and a petroleum hydrocarbon diluent at the extraction stage J to extract the titanium ion in the sulphuric acid solution into the organic solvent (c) as a sulphuric acid complex and to give an extraction raffinate (k).

Subsequently, the organic solvent (c) containing the extracted titanium-sulphuric acid complex is introduced to a stripping stage K, where the organic solvent is brought into contact with water (or dilute sulphuric acid (l) and/or the rinsing liquid (j)′ from the rinsing stage G which has been used for rinsing of the titanium

hydroxide in the second step) to transfer the titanium-sulphuric acid complex from the organic phase to the aqueous liquid to give an aqueous solution (l)' and to regenerate the organic solvent (c). This stripping liquid (l)' which has been used for stripping in the fourth step is recycled to the stripping stage C of the first step. In such a manner, all of the titanium extracted by the organic solvents (a), (b), and (c) is converted to titanium hydroxide.

The flow sheet of Figure 4 is basically the same as that in Figure 3. In Figure 4, however, the extraction raffinate (e) and (e)' of the extraction stage B of the first step is partly or wholly introduced to a mixing stage M, where at least one of the compounds (s) selected from the chlorine compounds of H, Na, $HN_4$, K, Mg, Fe, and Ti is added to the raffinate (e)'. The resulting liquid (m) is introduced to the extraction stage D of the third step and is brought into contact with the organic solvent (b) to extract the chloride complex and the sulphuric acid complex of titanium into the organic solvent.

Subsequently, the organic solvent (b) containing the extracted chloride complex and sulphuric acid complex of titanium is introduced to a scrubbing stage L, where the organic solvent is brought into contact with a portion of the liquid (f)' containing titanyl sulphate coming from the stripping stage E to transfer selectively the metal chloride complex, chlorine ion and metal ions other than titanium from the organic solvent to the aqueous solution. The stripping liquid (m)' leaving the stripping stage is recycled to the extraction stage D.

The organic solvent (b), which now (after the stage L) contains only the titanium-sulphuric acid complex, is brought into contact in the stripping stage E with water (or dilute sulphuric acid (f) or a dilute sulphuric acid solution (j)') to transfer the titanium-sulphuric acid complex from the organic phase to the aqueous liquid to produce an aqueous (f)' solution and to regenerate the organic solvent (b).

The titanyl sulphate-containing liquid (f)' produced by the stripping is introduced through the stripping stage C of the first step to the hydrolysis stage F of the second step.

The titanyl sulphate-containing liquid (l)' derived by stripping in stage K of the titanium-sulphuric acid complex from the organic solvent (c) in the fourth step is introduced to the hydrolysis stage F of the second step, where it is hydrolyzed together with the titanium sulphate containing solution (d)' by a conventional method to give insoluble titanium hydroxide through the rinsing stage G.

The aqueous solution (h) from which the titanium hydroxide has been separated is introduced to the extraction stage J of the fourth step, and the rinsing liquid (j)' leaving the rinsing stage G is recycled for stripping in the first, third, and fourth steps.

The flow sheet of Figure 5 is basically the same as that of Figure 4. In Figure 5, the whole of the raffinate (e) of the first step, or a portion thereof (e)' is brought into contact in a scrubbing stage L, before introduction to the mixing stage M, with the organic solvent (b) containing the extracted titanium-chloride complex and the sulphuric acid complex. In this scrubbing stage L, the metal chloride complex and the chlorine ion in the organic solvent are selectively transferred into an aqueous solution (m)' to make the organic solvent (b) contain only titanium-sulphuric acid complex.

The organic solvent (b) is brought into contact at the stripping stage E with the rinsing liquid (j)' (which has been used for rinsing titanium hydroxide in the second step) to transfer the titanium-sulphuric acid complex to the aqueous solution (f)', the organic solvent (b) thus being regenerated.

The stripping liquid (l)' (having used for stripping in stage K of the fourth step) and containing titanyl sulphate and that (f)' from the third step are introduced to a scrubbing stage N and are brought into contact with the organic solvent (a) containing a titanium-sulphuric acid complex to transfer the metal ions other than titanium and the metal sulphuric acid complex selectively from the organic solvent to an aqueous solution (p) to purify the titanium-sulphuric acid complex contained in the organic solvent (a). The scrubbing liquid (p) after the scrubbing is introduced to the extraction stage B of the first step.

Figure 6 is a flow sheet which is basically the same as that in Figure 3. In Figure 6, the titanium-containing raw material P (titanium iron ore, titanium slag, and/or a titanium-containing industrial waste) is introduced to a sulphation stage Q, where it is mixed with concentrated sulphuric acid (g) and digested at an elevated temperature. The reaction product after completion of the reaction is introduced to a dissolution stage R, and are dissolved in the extraction raffinate (e) of the extraction stage B of the first step. The resulting solution is introduced to a crystallisation stage S to remove iron ion as crystalline ferrous sulphate T. The resulting solution A is led to the extraction stage B.

The flow sheet of Figure 7 is basically the same as those shown in Figure 1, Figure 5, and Figure 6. In Figure 7, the removal of iron ion is modified as below. The sulphation reaction product is dissolved at the dissolution stage R and then introduced to the extraction stage B of the first step, where most part of the titanium in the sulphuric acid solution is extracted as a sulphuric acid complex to the organic solvent (b). The raffinate is led to the crystallisation apparatus S, where iron ion contained in the raffinate is removed as crystalline ferrous sulphate T. As another modification, the extraction raffinate (g) of the stage D of the third step is introduced to an apparatus U having chambers partitioned by an anion dialysis membrane, where free acid is removed from

the raffinate by utilising the difference of the sulphuric acid concentration from clear water (r), thus obtaining sulphuric acid Y containing no metal ion, and a solution (g)' containing ions of zirconium, niobium, chromium, vanadium, manganese, aluminium, magnesium, and iron.

The raffinate (k) from the extraction stage J can be led to an evaporation concentrator W and the concentrated sulphuric acid containing output (t) led to the sulphation stage Q.

The flow sheet of Figure 8 is basically the same as that of Figure 5. In Figure 8, concentrated sulphuric acid (t)' is added to the liquid (h) after hydrolysis before the solution is led to the extract stage J of the fourth step. The extraction raffinate (k) of the fourth step is introduced to a conventional evaporation-concentration stage W to give concentrated sulphuric acid (t). The resulting concentrated sulphuric acid (t) is recycled to the digestion stage Q for sulphating the raw material P.

The flow sheet of Figure 9 is basically the same as that in Figure 8. In Figure 9, the ferrous sulphate obtained at the crystallisation stage S is introduced to a recrystallisation stage S' where the ferrous sulphate is dissolved with the rinsing liquid (j)' (from the titanium hydroxide-rinsing stage G) to give a recrystallised product T. The mother liquor (u) of the recrystallisation is added to the raffinate (e)' from the extraction stage B and contacted with extracting solvent (b) in the extraction stage D of the third step.

The present invention will now be described in more detail by reference to examples, which illustrate the invention but do not limit it.

The raw material employed for preparing the titanium ion-containing sulphuric acid had the compositions as shown in Table 1. In the experiments, two kinds of the raw materials are suitably mixed and pulverised.

TABLE 1 Analysis of Raw Materials

(% by weight)

| Material | $TiO_2$ | FeO | $Fe_2O_3$ | $Cr_2O_3$ | $Al_2O_3$ | $ZrO_2$ |
|---|---|---|---|---|---|---|
| Ilmenite | 52.6 | 34.3 | 6.5 | 0.02 | 2.3 | 0.1 |
| Slag | 85.5 | 10.8 | - | 0.22 | 1.2 | 0.1 |

| Material | $Nb_2O_5$ | MgO | $V_2O_5$ | Mn |
|---|---|---|---|---|
| Ilmenite | 0.2 | 0.1 | 0.04 | 2.6 |
| Slag | 0.13 | 0.9 | 0.5 | 1.6 |

The raw materials above were pulverised to a particle size of 325 mesh (US Sieve Series which have openings 44 microns across) or smaller, and were mixed with sulphuric acid of not less than 90% concentration. The mixture was digested at a high temperature of from 160 to 200°C for 24 hours. The digested product was leached with water, dilute sulphuric acid, or a metal sulphate-containing solution (the composition of an example of which is shown in Table 2) to prepare a starting material for the present invention.

Table 2: Metal Sulphate-containing Solution for Dissolution

(Unit: g/l)

| Total $H_2SO_4$ | $TiO_2$ | Fe | Cr | Al | $ZrO_2$ | $Nb_2O_5$ | Mg | $V_2O_5$ | Mn |
|---|---|---|---|---|---|---|---|---|---|
| 680.7 | 1.9 | 28.1 | 2.0 | 4.3 | 2.2 | 2.8 | 0.83 | 4.8 | 42.6 |

The above sulphate-containing solution is merely an example out of various sulphate-containing solutions which could be used. The starting materials employed in the experiments were prepared by leaching the sulphated raw materials with the sulphate containing solution, and cooled to a temperature of 4 to 15°C to remove the iron ion as crystalline $FeSO_4\ 7H_2O$. The compositions are shown in Table 3.

[a] First Step

Table 3: Solutions for Treatment in First Step

(Unit: g/l)

| Kind | $H_2SO_4$ (total) | $TiO_2$ | Fe | Cr | Al | $ZrO_2$ | $Nb_2O_5$ | Mg | $V_2O_5$ | Mn |
|---|---|---|---|---|---|---|---|---|---|---|
| A | 710.0 | 208.1 | 42.5 | 2.4 | 3.9 | 1.8 | 2.4 | 1.33 | 6.1 | 7.1 |
| B | 780.6 | 87.4 | 28.6 | 2.2 | 5.8 | 2.3 | 2.9 | 0.89 | 5.0 | 45.1 |

The continuous extraction tests were conducted by employing two kinds of organic solvents as the solvent (a). The solvent (a) for use with starting solution (A) consisted of 20% of trioctylphosphine oxide, 5% of dioctylacetamide, and the balance of a paraffin diluent. The solvent (a) for use with the starting solution (B) consisted of 15% of trioctylphosphine oxide, 15% of octyl dioctylphosphinate and the balance of a paraffin diluent.

Table 4: Continuous Extraction Tests for First Step (1)

(Unit: g/l)

| Kind | Phase | $TiO_2$ | Fe | Cr | Mn | $V_2O_5$ | $H_2SO_4$ (total) |
|---|---|---|---|---|---|---|---|
| A | Organic | 32.1 | 0.12 | <0.01 | <0.01 | <0.01 | 80.4 |
| | Aqueous | 36.6 | 41.9 | 2.4 | 7.1 | 6.1 | 391.7 |
| B | Organic | 27.4 | <0.01 | <0.001 | <0.001 | <0.001 | 40.3 |
| | Aqueous | 5.2 | 28.4 | 2.2 | 44.9 | 4.9 | 686.7 |

Extraction conditions :

(A) Liquid temperature : 24.5°C, Extraction : two stages
Flow ratio (Organic/Aqueous) in extraction : 73 l/10 l
Flow ratio (Organic/Aqueous) in stripping : 73 l/0.4 l
(B) Liquid temperature : 28°C, Extraction : three stages
Flow ratio (Organic/Aqueous) in extraction : 30 l/10 l
Flow ratio (Organic/Aqueous) in stripping : 30 l/0.15 l
For the stripping liquid, various sulphate salt solutions, sulphuric acid-containing solutions, and the stripping solution which has been used for the stripping are useful. In these tests the stripping solution shown in Table 5 was used for (A), and the stripping solution after stripping shown in Table 8 was used for (B).

The organic solvent leaving the extraction stage may be stripped by use of water, dilute sulphuric acid, or the like. In the present tests, the stripping liquid for the third step and the rinsing liquid after rinsing of titanium hydroxide were used for continuous stripping tests. The results are shown in Table 5.

Table 5: Continuous stripping Tests for First Step (1)

(Unit: g/l)

| Classification | Phase | $TiO_2$ | Fe | Cr | Mn | $V_2O_5$ | $H_2SO_4$ |
|---|---|---|---|---|---|---|---|
| A | Organic | 8.5 | <0.001 | <0.001 | <0.001 | <0.001 | 36.8 |
| | Aqueous | 193.9 | 0.045 | <0.001 | <0.001 | <0.001 | 427.0 |
| B | Organic | 0.12 | <0.001 | <0.001 | <0.001 | <0.001 | 9.0 |
| | Aqueous | 191.9 | 0.008 | 0.007 | <0.001 | <0.001 | 421.4 |

Stripping Condition:

Temperature: A: 24.5°C, B: 28°C

Number of stripping stages: 6 stages

Flow ratio (organic/aqueous) A: 73 l/13.3 l

B: 30 l/4.3 l

[b] Second step

The liquid after the stripping obtained in Table 5 (A) is subjected to hydrolysis according to the method disclosed in U.S. Patent 2,253,595 and other known literature.

As the results, in the liquid after the hydrolysis, the concentration of sulphuric acid was 341 g/l, and the concentration of $TiO_2$ was 9.0 g/l, which shows that 94% of the titanium before the hydrolysis was converted to insoluble titanium hydroxide.

The liquid after the stripping (B) in Table 5 was also subjected to hydrolysis according to a known method to give insoluble titanium hydroxide.

The results of the analysis of the solution after separation of titanium hydroxide and rinse water after the rinse are shown in Table 6.

Table 6: Analysis of Hydrolysis Filtrate and Rinse Water

(Unit: g/l)

| | $TiO_2$ | Fe | Cr | Mn | $V_2O_5$ | $H_2SO_4$ (Total) |
|---|---|---|---|---|---|---|
| Filtrate after hydrolysis | 9.1 | 0.004 | 0.005 | <0.001 | 0.007 | 270.4 |
| Water after rinse of titanium hydroxide | 0.8 | <0.001 | <0.001 | <0.001 | <0.001 | 54.3 |

[c] Third step

A portion of the extraction raffinate of the continuous extraction test (B) shown in Table 4 was introduced to the third step, and tested for continuous extraction, before the recovery of $Nb_2O_5$, $ZrO_2$, Mn, Al, Cr, $V_2O_5$, Fe and Mg contained in the sulphuric acid solution, by use as the organic solvent (b) of firstly an organic solvent C consisting of 15% of trioctylphosphine oxide, 15% of dioctylacetamide, and the balance of a paraffin diluent, and secondly an organic solvent D consisting of 10% of trioctylphosphine oxide, 7.5% of dipentyl pentylphosphonate, and the balance of a paraffin naphthene mixture diluent. The results are shown in Table 7.

Table 7: Continuous Extraction Tests of Third Step (2)

(Analysis of Discharged Liquids) (Unit: g/l)

| Classification | Phase | $H_2SO_4$ (total) | $TiO_2$ | Fe | Cr | Mn |
|---|---|---|---|---|---|---|
| Solvent C | Organic | 42.3 | 11.5 | 0.02 | 0.06 | <0.001 |
| | Aqueous | 664.5 | 0.01 | 20.4 | 2.2 | 44.9 |
| Solvent D | Organic | 39.1 | 16.2 | 0.01 | <0.01 | <0.001 |
| | Aqueous | 297.4 | 0.3 | 41.6 | 2.4 | 7.1 |

| Classification | Phase | $V_2O_5$ | Al | $ZrO_2$ | $Nb_2O_5$ | Mg |
|---|---|---|---|---|---|---|
| Solvent C | Organic | 0.02 | <0.001 | <0.01 | <0.01 | <0.001 |
| | Aqueous | 4.8 | 4.3 | 2.2 | 2.8 | 0.83 |
| Solvent D | Organic | <0.01 | <0.001 | <0.01 | <0.01 | <0.001 |
| | Aqueous | 6.1 | 3.7 | 2.2 | 2.7 | 1.33 |

Extraction conditions:

Temperature: 24.5°C - 28°C

Number of extraction stages: three stages

Extraction flow ratio (organic/aqueous):

C: 0.14 l/0.3 l, D: 0.15 l/0.5 l

Scrubbing flow ratio (organic/aqueous):

C: 0.14 l/0.002 l, D: 0.15 l/0.003 l

The scrubbing liquid used was the stripping liquid after the stripping shown in Table 8.

A stripping tests were conducted by using the rinsing liquid after the rinse of the titanium hydroxide as shown in Table 6. The results are shown in Table 8.

Table 8: Stripping Test of Third Step (2)

(Analysis of discharged liquids) (Unit: g/l)

| Classification | Phase | $TiO_2$ | Fe | Cr | Mn | $V_2O_5$ | $H_2SO_4$ (total) |
|---|---|---|---|---|---|---|---|
| Solvent C | Organic | 0.2 | <0.001 | <0.001 | <0.001 | <0.001 | 9.7 |
| | Aqueous | 40.4 | 0.11 | 0.20 | <0.001 | 0.07 | 168.4 |
| Solvent D | Organic | 0.13 | 0.11 | <0.001 | <0.001 | <0.001 | 4.9 |
| | Aqueous | 38.5 | 0.04 | <0.01 | <0.001 | <0.01 | 187.2 |

Stripping conditions:

Temperature: 24.5°C - 28°C

Number of stages of stripping: three stages

Flow ratio (organic/aqueous):

C: 0.14 l/0.042 l, D: 0.15 l/0,038 l

From the stripping liquid after stripping, 0.002 l of Solvent C, or 0.003 l of Solvent D was employed for the scrubbing solution in extraction test (2).

Test of Titanium chloride Complex Extraction in Third Step :

To the extraction raffinate of the first step, sodium chloride was added as a metal chloride giving a solution shown in Table 9. This liquid was used for the test. As the organic solvent (b) an organic solvent E was used which consisted of 20% by volume of trioctylphosphine oxide and the balance of a paraffin diluent. The extraction apparatus mentioned above was employed for the test. The results are shown in Table 9.

Table 9: $TiOCl_2$ Extraction Test (3)

(Unit: g/l)

| | | $H_2SO_4$ (total) | HCl (total) | $TiO_2$ | Fe | Cr | Na |
|---|---|---|---|---|---|---|---|
| Starting liquid | | 353.5 | 15.6 | 12.2 | 41.9 | 2.4 | 10.3 |
| Solvent E: | Organic phase | 9.4 | 7.6 | 12.2 | 0.3 | <0.01 | <0.10 |
| | Aqueous phase | 342.5 | 8.0 | <0.1 | 41.6 | 2.4 | 10.3 |

Extraction conditions:

Temperature: 24.5°C - 28°C

Number of extraction stages: three stages

Flow ratio (organic/aqueous): 0.14 l/0.14 l

Chloride Complex Scrubbing Test :

The apparatus employed was the same as the one employed in the above chloride complex extraction test. The organic solvent E in Table 9 and the extraction raffinate of the first step were used. The results of the analysis of the two liquids before and after the test are shown in Table 10.

Table 10: Scrubbing Text by Extraction Raffinate (1)

(Unit: g/l)

| | | $H_2SO_4$ (total) | HCl (total) | $TiO_2$ | Fe | Na | Cr |
|---|---|---|---|---|---|---|---|
| Before | Organic | 9.4 | 7.6 | 12.2 | 0.3 | <0.01 | <0.01 |
| test | Aqueous | 391.7 | <0.1 | 36.6 | 41.9 | <0.1 | 2.4 |
| After | Organic | 68.7 | <0.1 | 28.1 | <0.01 | <0.001 | <0.001 |
| test | Aqueous | 332.4 | 7.6 | 20.7 | 42.2 | <0.1 | 2.4 |

Scrubbing condition:

Temperature: 24.5°C

Flow ratio (organic/aqueous): 0.14 l/0.14 l

Number of scrubbing stage: one stage

The organic solvent E after the scrubbing shown in Table 10 and the rinsing liquid which had been used for rinsing the insoluble titanium hydroxide in the second step (having a sulphuric acid concentration of 50.5 g/l) were employed for stripping test. The result is shown in Table 11.

Table 11: Stripping Test (3)

(Unit: g/l)

| Phase | $H_2SO_4$ (total) | $TiO_2$ | Fe | Mn | Cr | $V_2O_5$ | Cl |
|---|---|---|---|---|---|---|---|
| Organic | 0.6 | 0.22 | <0.001 | <0.001 | <0.001 | <0.001 | <0.001 |
| Aqueous | 324.4 | 122.2 | <0.01 | <0.001 | <0.001 | 0.002 | 0.004 |

Stripping conditions:

Temperature: 24.5°C

Number of stages of stripping: five stages

Flow ratio (organic/aqueous): 0.14 l/0.035 l

[d] Fourth Step

As understood from the composition of the filtrate separated after the hydrolysis, not all of the titanyl sulphate can be converted to insoluble titanium hydroxide by a conventional hydrolysis method. Therefore, the filtrate separated from the insoluble titanium hydroxide contains $TiO_2$. This filtrate was subjected to continuous extraction of the contained $TiO_2$, with a solvent (c) which was 30% trioctylphosphine oxide in paraffin. The result is shown in Table 12.

Table 12: Extraction Test of Fourth Step (4)

(Analysis of discharged liquid) (Unit: g/l)

| Phase | $TiO_2$ | Fe | Cr | Mn | $V_2O_5$ | $H_2SO_4$ (total) |
|---|---|---|---|---|---|---|
| Organic | 9.5 | <0.001 | <0.001 | <0.001 | <0.001 | 26.0 |
| Aqueous | 0.002 | 0.004 | 0.005 | 0.001 | 0.007 | 254.6 |

Extraction Conditions:

Temperature: 28°C

Number of extraction stage: four stages

Flow ratio (organic/aqueous): 10 l/10 l

Concentration sulphuric acid was added to the same hydrolysis system and subjected to extraction test by use of the same organic solvent (c). The result is shown in Table 13.

Table 13: Extraction of Fourth Step (5)

Unit: g/l)

| | Phase | $TiO_2$ | Fe | Cr | Mn | $V_2O_5$ | $H_2SO_4$ (total) |
|---|---|---|---|---|---|---|---|
| Before test | Aqueous | 8.6 | 0.003 | 0.004 | <0.001 | 0.006 | 429.2 |
| After | Organic | 25.8 | <0.001 | <0.001 | <0.001 | <0.001 | 41.0 |
| test | Aqueous | <0.001 | 0.003 | 0.004 | <0.001 | 0.006 | 415.5 |

Extraction Conditions:

Temperature: 28°C

Number of extraction stages: two stages

Flow ratio (organic/aqueous): 10 1/30 1

In the stripping test, the water which had been used for rinsing the insoluble titanium hydroxide was used for the stripping liquid. The result of the test is shown below.

Table 14: Stripping Test in Fourth Step (4)

(Unit: g/l)

| Classification | Phase | Amount of liquid | $TiO_2$ | $H_2SO_4$ (total) | Fe | Cr |
|---|---|---|---|---|---|---|
| (4) | Organic | 10 l | 0.4 | 11.1 | <0.001 | <0.001 |
| | Aqueous | 5 l | 19.1 | 84.1 | <0.001 | <0.001 |
| (5) | Organic | 10 l | 0.4 | 11.2 | <0.001 | <0.001 |
| | Aqueous | 2 l | 129.1 | 203.3 | <0.001 | <0.001 |

The aqueous phase having been used for the above stripping may be used for the stripping liquid of the first step or for the rinsing liquid to recover the titanium dioxide as insoluble titanium hydroxide.

[e] Acid Recovery Stage

The extraction raffinate shown in Table 12 or Table 13 is concentrated and recovered as 80-90% $H_2SO_4$ for use for sulphation reaction of the titanium raw material. The extraction raffinate shown in Table 7 contains free sulphuric acid in an amount of 442 g/l. This raffinate was introduced to a membrane-separation apparatus U having chambers partitioned by anion-selective dialysis membrane, and the free sulphuric acid was recovered by flowing clear water through both sides of the chamber. The anion-selective dialysis membrane was Selemion CMV (trade name, made by Asahi Glass Co., Ltd.). The result of analysis of the recovered liquid and the treated liquid is shown in Table 15.

Table 15: Test for Recovering Sulphuric Acid by Dialysis

(Unit: g/l)

| Liquid | $TiO_2$ | Fe | Cr | Mn | $V_2O_5$ |
|---|---|---|---|---|---|
| Recovered liquid | <0.001 | <0.001 | 0.004 | <0.001 | 0.14 |
| Treated liquid | <0.001 | 20.4 | 2.2 | 44.9 | 2.7 |

| Liquid | $H_2SO_4$ (total) | $ZrO_2$ | $Nb_2O_5$ | Al | Mg |
|---|---|---|---|---|---|
| Recovered liquid | 307.1 | <0.001 | <0.001 | <0.001 | <0.001 |
| Treated liquid | 358.0 | 2.0 | 2.9 | 5.8 | 0.89 |

The recovered sulphuric acid is concentrated by evaporation, e.g. in the apparatus W together with the extraction raffinate of the fourth step.

In the production of titanium dioxide by a sulphuric acid process according to the present invention, the consumption of 98% $H_2SO_4$ per ton of $TiO_2$ can be remarkably reduced to 1.4 tons for ilmenite, and 0.3 ton for titanium slag as the raw material in comparison with 3.7 tons and 2.2 tons respectively in conventional processes.

Further, according to the present invention, sulphuric acid salt solution is simultaneously obtained from which metals other than titanium, such as Al, Mg, V, Cr, Zr, Nb and Mn, can be recoverable economically, and various titanium-containing industrial waste may be used as the raw materials since the raw materials are not limited in the present invention.

The production process of titanium dioxide has been converted from sulphuric acid process to chlorine processes all over the world in spite of many advantages of the sulphuric processes because of great amount of industrial waste brought about thereby. However, the disadvantages in the sulphuric acid process are all cancelled by the present invention. The metals other than titanium such as Zr, Nb, Cr and Mn produced by-products also reduce the production cost of the titanium advantageously.

The signification of the symbols used in the present specification are collectively shown below.

A : Titanyl sulphate solution : starting material of the present invention,

B : Extraction stage for titanium-sulphuric acid complex in first step.

C : Stripping stage for titanium-sulphuric acid complex in the first step,

D : Extraction stage for titanium-sulphuric acid complex or titanium-chloride complex in the third step,

E : Stripping stage in third step,

F : Hydrolysis stage in the second step for hydrolysing titanyl sulphate derived from stripping stage of first step,

G : Rinsing stage for insoluble titanium hydroxide,

H : Titanium hydroxide,

J : Extraction stage in fourth step for extracting titanium-sulphuric acid complex from sulphuric acid solution after separation of titanium hydroxide in second step,

K : Stripping stage for titanium-sulphuric acid complex in fourth step,
L : Scrubbing stage in third step (selective removal of chlorine ion and metal-chloride complex),
M : Mixing stage for chloride,
N : Scrubbing stage in first step for removing impurities from organic phase,
P : Titanium-iron ore (ilmenite or anatase), titanium slag, or titanium-containing industrial waste,
Q : Sulphation stage (digestion stage),
R : Dissolution stage (leaching stage) for digested solid,
S : Crystallisation stage for ferrous sulphate,
T : Crystalline ferrous sulphate ($FeSO_4$ $nH_2O$),
U : Sulphuric acid recovery stage employing anion dialysis membrane apparatus,
W : Evaporation-concentration stage,
Y : Sulphuric acid recovered by dialysis
a), (b), and (c) : Organic solvent composed of one or more extractants selected from group of oxygen-containing extractants and alkyl amine extractants, and petroleum hydrocarbon diluent,
(d) : Stripping liquid to be used in stripping stage of first step : water of dilute sulphuric acid,
(d)' : Stripping liquid after stripping at stripping stage of first step,
(e), and (e)' : Extraction raffinate of first step : sulphuric acid solution containing titanium ion and other metal sulphates,
(f) : Stripping liquid for stripping stage of third step,
(f)' : Stripping liquid after stripping of third step,
(g) : Extraction raffinate of third step,
(g)' : Discharged liquid after acid recovery from extraction raffinate of third step by anion dialysis membrane,
(h) : Filtrate after hydrolysis of second step,
(j) : Rinsing liquid for insoluble titanium hydroxide formed at second step,
(j)' : Rinsing liquid having been used for rinsing titanium hydroxide at second step,
(k) : Extraction raffinate of fourth step,
(l) : Stripping liquid for stripping at fourth step,
(l)' : Stripping liquid after stripping,
(m) : Mixture of extraction raffinate of first step with chloride,
(m)' : Scrubbing solution after scrubbing for removal of chlorine ion and metal-chloride complex from organic solvent (b),
(r) : Clear water to be supplied to acid recovery apparatus employing anion dialysis membrane,
(s) : Chlorides of Na, $NH_4$, K, Mg, Fe and Ti to be supplied to mixing stage,
(t) : Concentrated sulphuric acid,
(t)' : Concentrated sulphuric acid to be added to liquid after hydrolysis of second step introduced to extraction stage of fourth step,
(u) : Mother liquor of recrystallisation of ferrous sulphate.

According to a preferred embodiment of the invention there is provided a process for producing titanium dioxide comprising a first, a second and a third step combinedly :

the first step comprising bringing a sulphuric acid solution containing titanium ion together with one or more kinds of metal ions into contact with an organic solvent (a) composed of one or more extractants selected from the group consisting of oxygen-containing extractants and alkylamine extractants diluted with a petroleum hydrocarbon diluent to extract the titanium ion as a sulphuric acid complex from the sulphuric acid solution ; and bringing the organic solvent (a) containing the extracted titanium in a form of a sulphuric acid complex (titanyl sulphate) into contact with an aqueous liquid having been employed for rinsing insoluble titanium hydroxide in the second step and/or an aqueous liquid having been employed for stripping in the third step to strip the titanium in a form of sulphuric acid complex into the aqueous liquid and to regenerate the organic solvent (a) for recycling for extraction,

the second step comprising treating the aqueous liquid containing the titanium in a form of sulphuric acid complex stripped from the organic solvent (a) for hydrolysis to form insoluble titanium hydroxide ; and washing the titanium hydroxide with dilute sulphuric acid and/or clear water, and

the third step comprising bringing a part or whole of raffinate of extraction in the first step into contact with an organic solvent (b) composed of an extractant selected from the group consisting of oxygen-containing extractants and alkylamine extractants diluted with a petroleum hydrocarbon diluent to extract the titanium ion as a sulphuric acid complex from the raffinate ; and bringing the organic solvent (b) containing extracted titanium in a form of sulphuric acid complex into contact with water, dilute sulphuric acid solution or a dilute titanyl sulphate solution to strip the titanium in a form of sulphuric acid complex to regenerate the organic solvent (b) for recycling the extraction.

In another embodiment there is provided a process for producing titanium dioxide which discharges no waste, the process comprising a first, a second and a third step combinedly :

the first step comprising bringing a sulphuric acid solution containing titanium ion together with one or more kinds of metal ions into contact with an organic solvent (a) composed of one or more extractants selected from the group consisting of oxygen-containing extractants and alkylamine extractants diluted with a petroleum hydrocarbon diluent to extract the titanium ion as a sulphuric acid complex from the sulphuric acid solution ; and bringing the organic solvent (a) containing the extracted titanium in a form of a sulphuric acid complex (titanyl sulphate) into contact with an aqueous liquid having been employed for rinsing insoluble titanium hydroxide formed in the second step

and/or an aqueous liquid having been employed for stripping in the third step to strip the titanium in a form of sulphuric acid complex into the aqueous liquid

and to regenerate the organic solvent (a) for recycling for extraction ; and recycling most of raffinate of extraction for dissolving a sulphated raw material,

the second step of treating the aqueous liquid containing the titanium in a form of sulphuric acid complex stripped from the organic solvent (a) for hydrolysis to form insoluble titanium hydroxide ; and washing the titanium hydroxide with dilute sulphuric acid and/or clear water, and

the third step of mixing, with a part of the raffinate of extraction in the first step, at least one compound selected from chlorine compounds of H, Na, $NH_4$, Mg, K, Fe, and Ti ; bringing the mixture into contact with an organic solvent (b) composed of an extractant selected from the group consisting of oxygen-containing extractants and alkylamine extractants diluted with a petroleum hydrocarbon diluent to extract the titanium ion as a chloride complex and a sulphuric acid complex from the raffinate of extraction ; bringing the organic solvent (b) containing extracted titanium into contact with an aqueous titanyl sulphate-containing solution or an aqueous sulphuric acid solution to transfer selectively the metal chloride complex, the chlorine ion, and a physically contaminating chloride into the aqueous solution ; and bringing the organic solvent (b) into contact with water, dilute sulphuric acid solution or a dilute titanyl sulphate solution to strip the titanium in a form of sulphuric acid complex to regenerate the organic solvent (b) for recycling to extraction.

The process preferably further comprises a fourth step of bringing a hydrolysis filtrate separated by filtration from the insoluble titanium hydroxide formed by hydrolysis at the second step into contact with an organic solvent (c) composed of an extractant selected from the group consisting of oxygen-containing extractants and alkylamine extractants diluted with a petroleum hydrocarbon diluent to extract the titanium ion contained in the hydrolysis filtrate as a sulphuric acid complex into the organic solvent (c) ; and bringing the organic solvent (c) into contact with water, dilute sulphuric acid, and/or a rinsing liquid after rinsing of insoluble titanium hydroxide in the second step to strip the titanium-sulphuric acid complex from the organic solvent (c) to the aqueous solution to regenerate and recycle the organic solvent (c) for use for extraction.

In another preferred embodiment there is provided a process for producing titanium dioxide from titanium-iron ore, titanium slag, and/or titanium-containing industrial waste through sulphate salt solution together with metals contained therein, comprising a first step, a second step, a third step and a fourth step :

the first step comprising digesting titanium-iron ore, titanium-containing slag, and/or titanium-containing industrial waste with a sulphuric

acid of high concentration ; dissolving digested product in a sulphate salt-containing solution ; cooling the sulphuric acid solution to remove iron ion in the solution as crystalline ferrous sulphate ; bringing the sulphuric acid solution into contact with an organic solvent (a) composed of one or more extractants selected from the group consisting of oxygen-containing extractants and alkylamine extractants diluted with a petroleum hydrocarbon diluent to extract the titanium ion as a sulphuric acid complex from the sulphuric acid solution to the organic solvent (a) ; bringing the organic solvent (a) containing the extracted titanium in a form of sulphuric acid complex (titanyl sulphate) into contact with a rinsing liquid after rinsing of insoluble titanium hydroxide formed at the second step and/or stripping liquid after stripping at the third step and fourth step containing titanium-sulphuric acid complex to strip the titanium-sulphuric acid complex from the organic solvent (a) to the aqueous solution to regenerate and recycle the organic solvent (a) for extraction ; and recycling most of raffinate of extraction for dissolving the digested product of the titanium-containing raw material with sulphuric acid,

the second step comprising hydrolyzing the aqueous solution containing the titanium-sulphuric acid complex to form insoluble titanium hydroxide ; and rinsing the resulting insoluble titanium hydroxide with dilute sulphuric acid and/or clear water,

the third step comprising bringing a portion of the raffinate of the first step containing metal ions other than titanium ion at economically recoverable concentrations into contact with an organic solvent (b) composed of an extractant selected from the group consisting of oxygen-containing extractants and alkylamine extractants diluted with a petroleum hydrocarbon diluent to extract the titanium ion in a form of a sulphuric acid complex from the raffinate to the organic solvent (b) ; and bringing the organic solvent (b) with water, dilute sulphuric

acid and/or an aqueous rinsing liquid after rinsing the insoluble titanium hydroxide at the second step to strip the titanium-sulphuric acid complex from the organic solvent (b) to the aqueous solution to regenerate and recycle the organic solvent (b) for extraction, and

the fourth step comprising bringing a hydrolysis liquid separated from the insoluble titanium hydroxide formed by hydrolysis at the second step into contact with an organic solvent (c) composed of an extractant selected from the group consisting of oxygen-containing extractants and alkylamine extractants diluted with a petroleum hydrocarbon diluent to extract the titanium ion remaining in the hydrolysis liquid in a form of a sulphuric acid complex into the organic solvent (c) ; and bringing the organic solvent (c) into contact with water, dilute sulphuric acid, and/or a rinsing liquid after rinsing of insoluble titanium hydroxide in the second step to strip the titanium-sulphuric acid complex from the organic solvent (c) to the aqueous solution to regenerate and recycle the organic solvent (c) for use for extraction.

Preferably part of the extraction raffinate is introduced to the third step and is brought into contact with the organic solvent (b) containing the extracted titanium-chloride complex to transfer the metal-chlorine complexes and chlorine ion in the organic solvent (b) to the aqueous solution, and then introducing the aqueous solution to a mixing stage for mixing chloride thereto.

The first step may further comprise a scrubbing stage, and a part or the whole of the stripping liquids having used for the stripping is introduced to the scrubbing stage of the first step and is brought into contact with the organic solvent (a) containing the extracted titanium-sulphuric acid complex to remove selectivity the coextracted metal ions other than titanium from the organic solvent (a) to the aqueous solution.

Preferably a portion or the whole of the extraction raffinate of the third step is introduced to a chamber of a membrane apparatus having chambers partitioned by an anion selective dialysis membrane, and clear water is introduced into the other partitioned chamber, to recover free sulphuric acid contained in the extraction raffinate by utilising the difference in sulphuric acid concentration in between the chambers, and the recovered sulphuric acid is recycled to any one of the first to fourth steps and evaporation-concentration stage.

Preferably the extraction raffinate of the fourth step is introduced to an evaporation concentration stage to raise the concentration of sulphuric acid, and is used for sulphation of a raw material including titanium-iron ore, titanium-containing slag, and/or titanium containing industrial waste.

Preferably a part or whole of the stripping liquid after stripping derived at the third step and the fourth step containing titanyl sulphate is brought into contact with the organic solvent (b) containing titanium sulphuric acid complex to transfer selectivity metal ions, metal-sulphuric acid complex, chlorine ion, and titanium-chloride complex coextracted other than titanium ion from the organic solvent (b) to the aqueous solution.

Preferably the chlorine compound to be mixed with the extraction raffinate of the first step is titanium-containing industrial waste from a chlorine-process of titanium production.

Preferably the liquid separated from the hydrolysis stage of the second step is mixed with concentrated sulphuric acid to raise the free acid concentration before being introduced to the fourth step.

Preferably the titanyl sulphate-containing solution derived from stripping of titanium-sulphuric acid complex from the organic solvent (c) at the fourth step is introduced to the hydrolysis stage of the second step, and is hydrolyzed to produce insoluble titanium hydroxide.

Preferably the extraction raffinate is introduced to a crystallisation apparatus to remove iron ion as ferrous sulphate, and is introduced to the third step for dissolution of the raw material.

Preferably the ferrous sulphate derived from the crystallisation apparatus is dissolved in the rinsing liquid having used for rinsing the titanium hydroxide and recrystallised therefrom, and a part or whole of the mother liquor of the recrystallisation is introduced to the extraction stage of the third step.

The organic solvents (a), (b) and (c) are composed of an extractant comprising one or more kinds of trialkylphosphine oxide, and from 1% to 500% thereto by volume of a dialkylacetamide, and alkyl ketone, an alkyl dialkylphosphinate, a dialkyl alkylphosphonate or an alkyl amine, or a mixture thereof and a petroleum hydrocarbon diluent.

## Claims

1. A process for producing titanium dioxide comprising :

a first step comprising bringing a sulphuric acid solution containing titanium ion together with one or more kinds of metal ions into contact with an organic solvent (a) composed of one or more extractants selected from the group consisting of oxygen-containing extractants and alkylamine extractants diluted with a petroleum hydrocarbon diluent to extract the titanium ion as a sulphuric acid complex from the sulphuric acid solution ; and bringing the organic solvent (a) containing the extracted titanium in the form of a sulphuric acid complex (titanyl sulphate) into contact with an aqueous liquid to strip the titanium in the form

of a sulphuric acid complex into the aqueous liquid and to regenerate the organic solvent (a) for recycling for extraction, and

a second step comprising treating the aqueous liquid containing the titanium in the form of sulphuric acid complex stripped from the organic solvent (a) to hydrolysis to form insoluble titanium hydroxide ; and preferably washing the titanium hydroxide with dilute sulphuric acid or water.

2. A process for producing titanium dioxide, the process comprising

a first step comprising bringing a sulphuric acid solution containing titanium ion together with one or more kinds of metal ions into contact with an organic solvent (a) composed of one or more extractants selected from the group consisting of oxygen-containing extractants and alkylamine extractants diluted with a petroleum hydrocarbon diluent to extract the titanium ion as a sulphuric acid complex from the sulphuric acid solution ; and bringing the organic solvent (a) containing the extracted titanium in the form of a sulphuric acid complex (titanyl sulphate) into contact with an aqueous liquid, which is an aqueous liquid which has been employed for rinsing insoluble titanium hydroxide in the second step or an aqueous liquid which has been employed for stripping in the third step or a mixture thereof, to strip the titanium in a form of a sulphuric acid complex into the aqueous liquid and to regenerate the organic solvent (a) for recycling for extraction,

a second step of treating the aqueous liquid containing the titanium in the form of a sulphuric acid complex stripped from the organic solvent (a) to hydrolysis to form insoluble titanium hydroxide ; and washing the titanium hydroxide with dilute sulphuric acid or water, and

a third step of bringing a part or whole of the raffinate from the first step into contact with an organic solvent (b) composed of an extractant selected from the group consisting of oxygen-containing extractants and alkylamine extractants diluted with a petroleum hydrocarbon diluent to extract the titanium ion as a sulphuric acid complex from the raffinate ; and bringing the organic solvent (b) containing extracted titanium in the form of a sulphuric acid complex into contact with an aqueous liquid, which may be water, dilute sulphuric acid solution or a dilute titanyl sulphate solution, to strip the titanium in the form of a sulphuric acid complex into the aqueous liquid and to regenerate the organic solvent (b) for recycling to extraction.

3. A process as claimed in Claim 1 or Claim 2 in which the process comprises a further step (the fourth step) of bringing the hydrolysis filtrate separated by filtration at the second step into contact with an organic solvent (c) composed of an extractant selected from the group consisting of oxygen-containing extractants and alkylamine extractants diluted with a petroleum hydrocarbon diluent to extract the titanium ion contained in the hydrolysis filtrate as a sulphuric acid complex into the organic solvent (c), and bringing the organic solvent (c) into contact with an aqueous liquid, which may be water, dilute sulphuric acid, or a liquid used to rinse the insoluble titanium hydroxide in the second step, or mixtures thereof, to strip the titanium-sulphuric acid complex from the organic solvent (c) into the aqueous liquid and to regenerate the organic solvent (c) for recycling to extraction.

4. A process as claimed in Claim 1, 2 or 3 in which the sulphuric acid solution containing titanium ion together with one or more kinds of metal ions is prepared by digesting titanium-iron ore, titanium-containing slag, and/or titanium-containing industrial waste with a sulphuric acid of high concentration ; dissolving the digested product in a sulphate salt-containing solution ; and cooling the sulphuric acid solution to remove iron ion in the solution as crystalline ferrous sulphate.

5. A process as claimed in Claim 1, 2, 3 or 4 in which most of raffinate from the first step is recycled for dissolving a sulphated raw material.

6. A process as claimed in Claim 1, 2, 3, 4 or 5 which comprises mixing with the raffinate from the first step or with a part thereof, at least one compound selected from chlorine compounds of H, Na, $NH_4$, Mg, K, Fe, and Ti ; bringing the mixture into contact with organic solvent (b) composed of an extractant selected from the group consisting of oxygen-containing extractants and alkylamine extractants diluted with a petroleum hydrocarbon diluent to extract the titanium ion as a chloride complex and a sulphuric acid complex from the raffinate of extraction ; bringing the organic solvent (b) containing extracted titanium into contact with an aqueous titanyl sulphate-containing solution or an aqueous sulphuric acid solution to transfer selectivity the metal chloride complex, the chlorine ion, and any physically contaminating chloride into the aqueous solution ; and then bringing the organic solvent (b) into contact with an aqueous liquid, which may be water, dilute sulphuric acid solution or a dilute titanyl sulphate solution, to strip the titanium in the form of sulphuric acid complex into the aqueous liquid and to regenerate the organic solvent (b) for recycling to extraction.

7. A process as claimed in any one of Claims 1 to 6 in which the first step further comprises a scrubbing stage, and a part or the whole of the stripping liquids which have been used for the stripping is introduced to the scrubbing stage of the first step and is brought into contact with the organic solvent (a) containing the extracted titanium-sulphuric acid complex to remove selectively the coextracted metal ions other than titanium from the organic solvent (a) to the aqueous liquid.

8. A process as claimed in any one of Claims 1 to 7 in which a part or the whole of the extraction raffinate from the third step is introduced to a chamber of a membrane apparatus having chambers partitioned by an anion selective dialysis membrane, and clear water is introduced into the other partitioned chamber, to recover free sulphuric acid contained in the extraction raffinate by utilising the difference in the sulphuric acid concentration between chambers, and the recovered sulphuric acid is recycled to any one of the first to fourth steps or to an evaporation-concentration stage.

9. A process as claimed in any one of Claims 1 to 8 characterised in that the extraction raffinate from the fourth stage is introduced to an evaporation concentration stage to raise the concentration of sulphuric acid, and is used for sulphation of a raw material including titanium-iron ore, titanium-containing slag, and/or titanium-containing industrial waste.

10. A process as claimed in any one of Claims 1 to 9 characterised in that a part or the whole of the stripping liquid after stripping produced at the third step and the fourth step and containing titanyl sulphate is brought into contact with the organic solvent (b) containing titanium sulphuric acid complex to transfer selectively metal ions other than titanium ion, metal (other than titanium ion) sulphuric acid complex, chlorine ion, and titanium-chloride complex coextracted from the organic solvent (b) to the aqueous liquid.

11. A process as claimed in any one of Claims 1 to 10 characterised in that a chlorine compound is mixed with the extraction raffinate of the first step and is titanium-containing industrial waste from a chlorine-process of titanium production.

12. A process as claimed in any one of Claims 1 to 11 characterised in that the liquid separated from the hydrolysis stage of the second step is mixed with concentrated sulphuric acid to raise the free acid concentration before being introduced to the fourth step.

13. A process as claimed in any one of Claims 1 to 12 characterised in that the titanyl sulphate-containing solution derived from stripping of titanium-sulphuric acid complex from the organic solvent (c) at the fourth step is introduced to the hydrolysis stage of the second step, and is hydrolysed to produce insoluble titanium hydroxide.

14. A process as claimed in any one of Claims 1 to 13 characterised in that the extraction raffinate is introduced to a crystallisation apparatus to remove iron ion as ferrous sulphate, and is introduced to the third step for dissolution of the raw material.

15. A process as claimed in any one of Claims 1 to 14 characterised in that ferrous sulphate derived from the crystallisation apparatus is dissolved in the rinsing liquid which has been used for rinsing the titanium hydroxide and recrystallised therefrom, and a part or whole of the mother liquor of the recrystallisation is introduced to the extraction stage of the third step.

16. A process as claimed in any one of Claims 1 to 15 characterised in that the organic solvents (a), (b) and (c) are composed of an extractant comprising one or more kinds of trialkylphosphine oxide, and from 1% to 500% thereto by volume of a dialkylacetamide, an alkyl ketone, an alkyl dialkylphosphinate, a dialkyl alkylphosphonate or an alkyl amine or mixtures thereof, and a petroleum hydrocarbon diluent.

FIG. 1

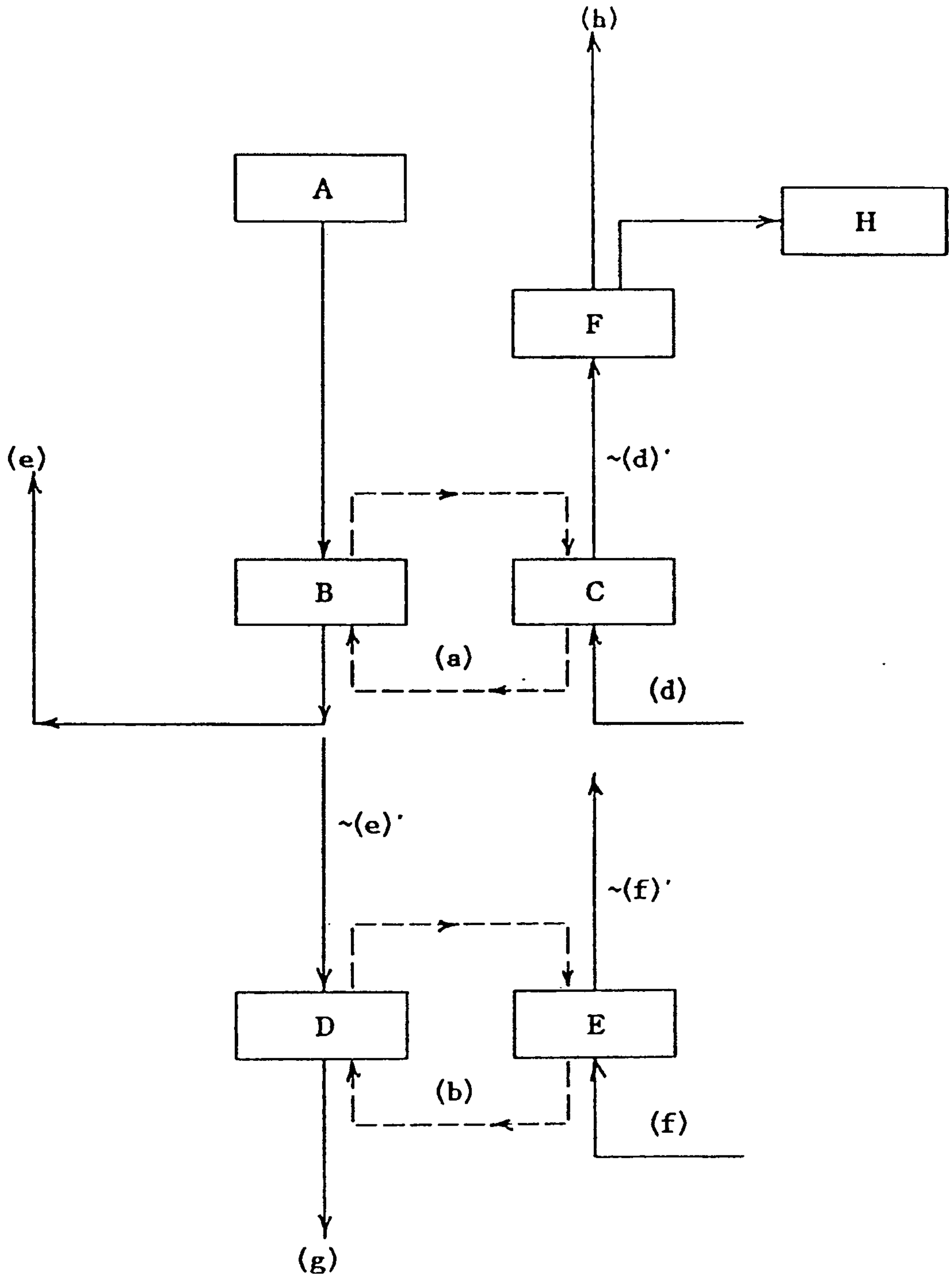

F I G. 2

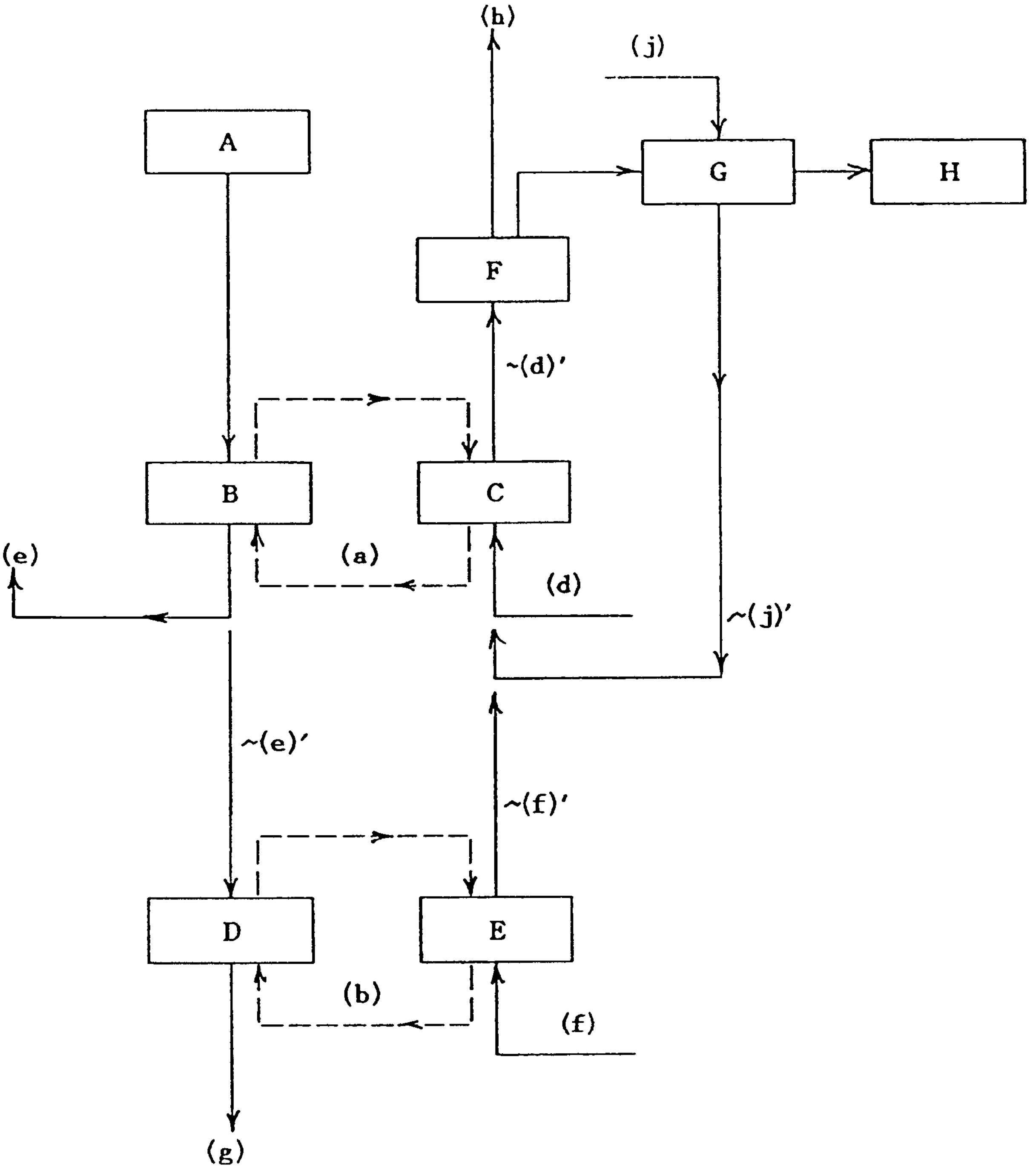

FIG. 3

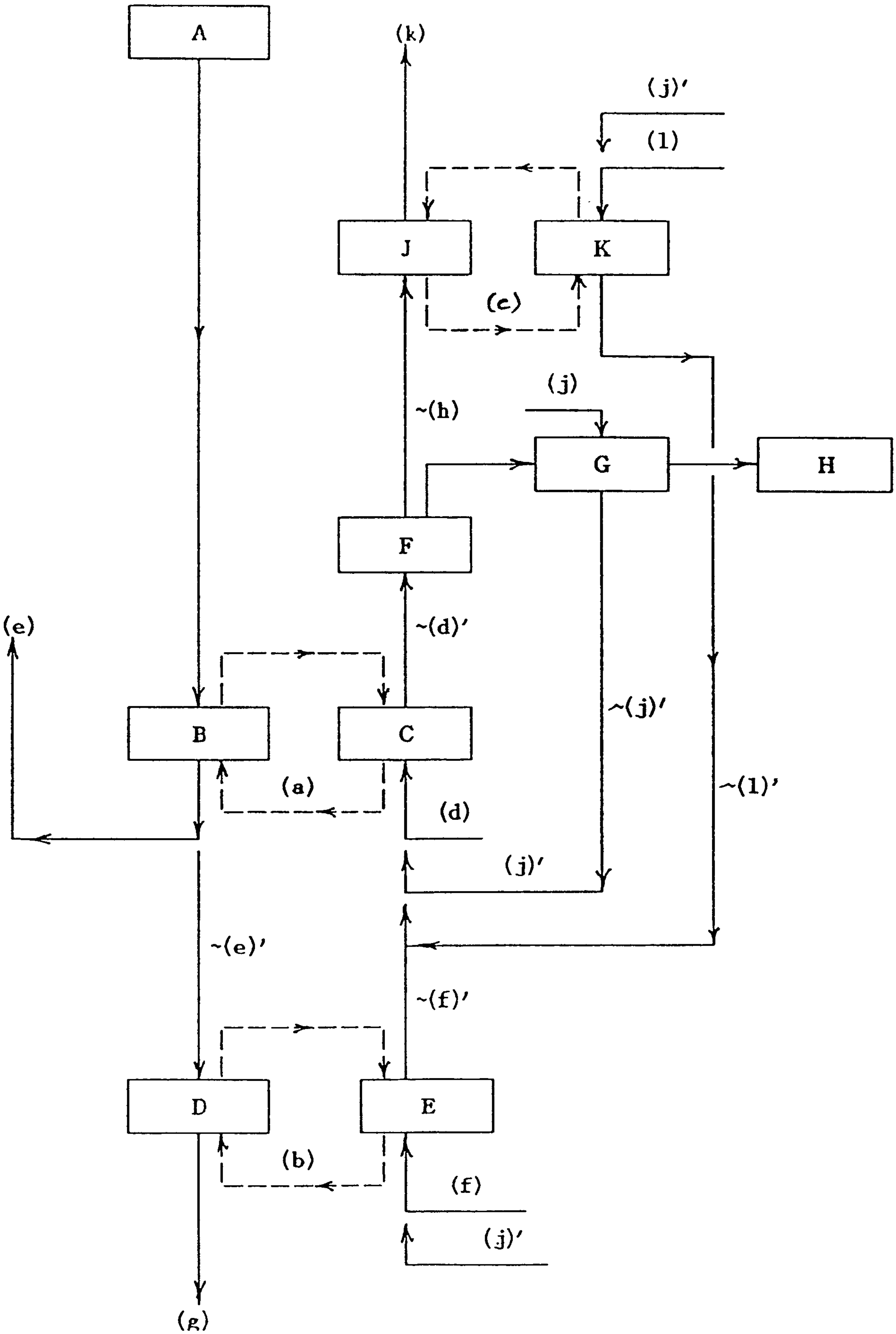

FIG. 4

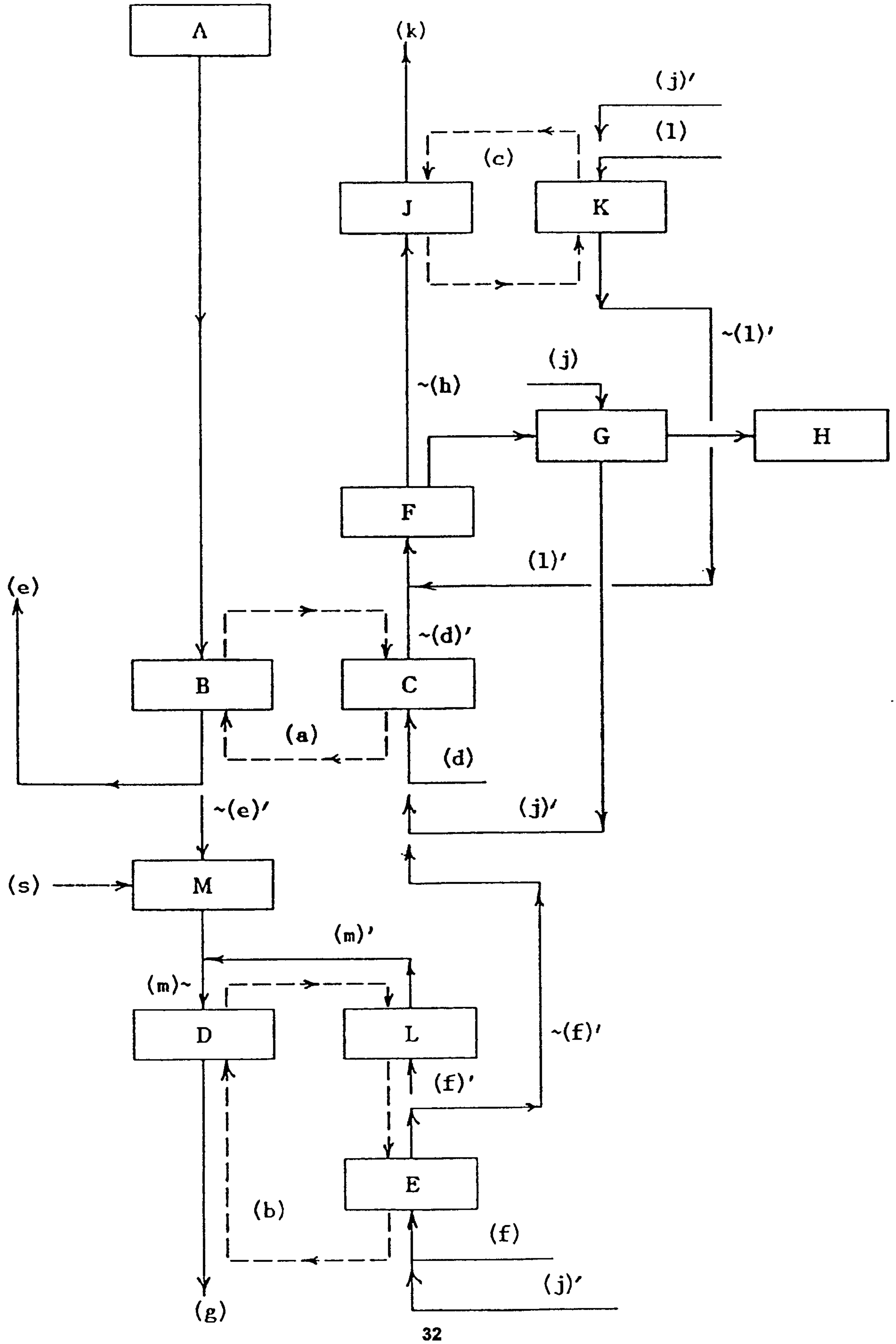

FIG. 5

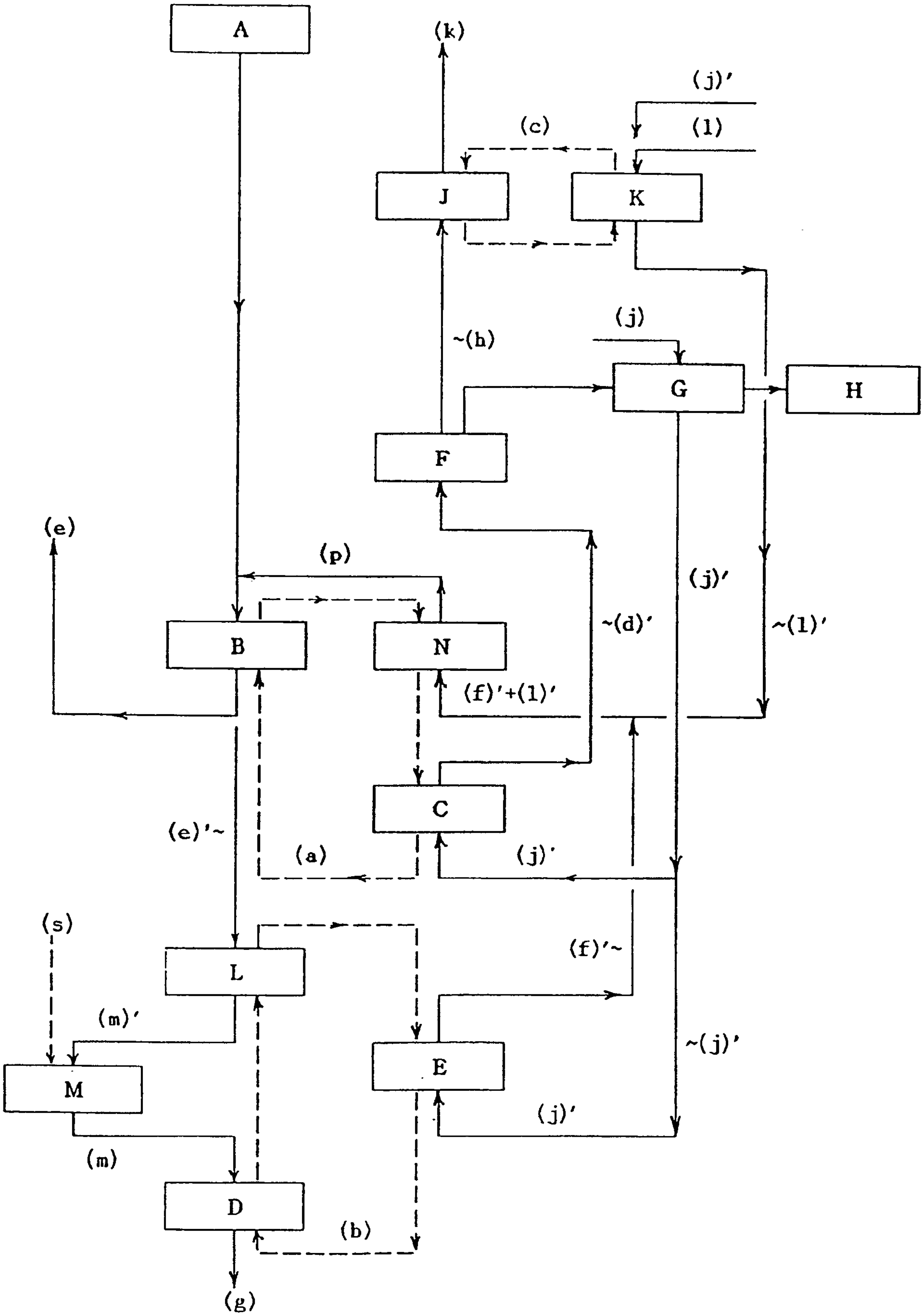

FIG. 6

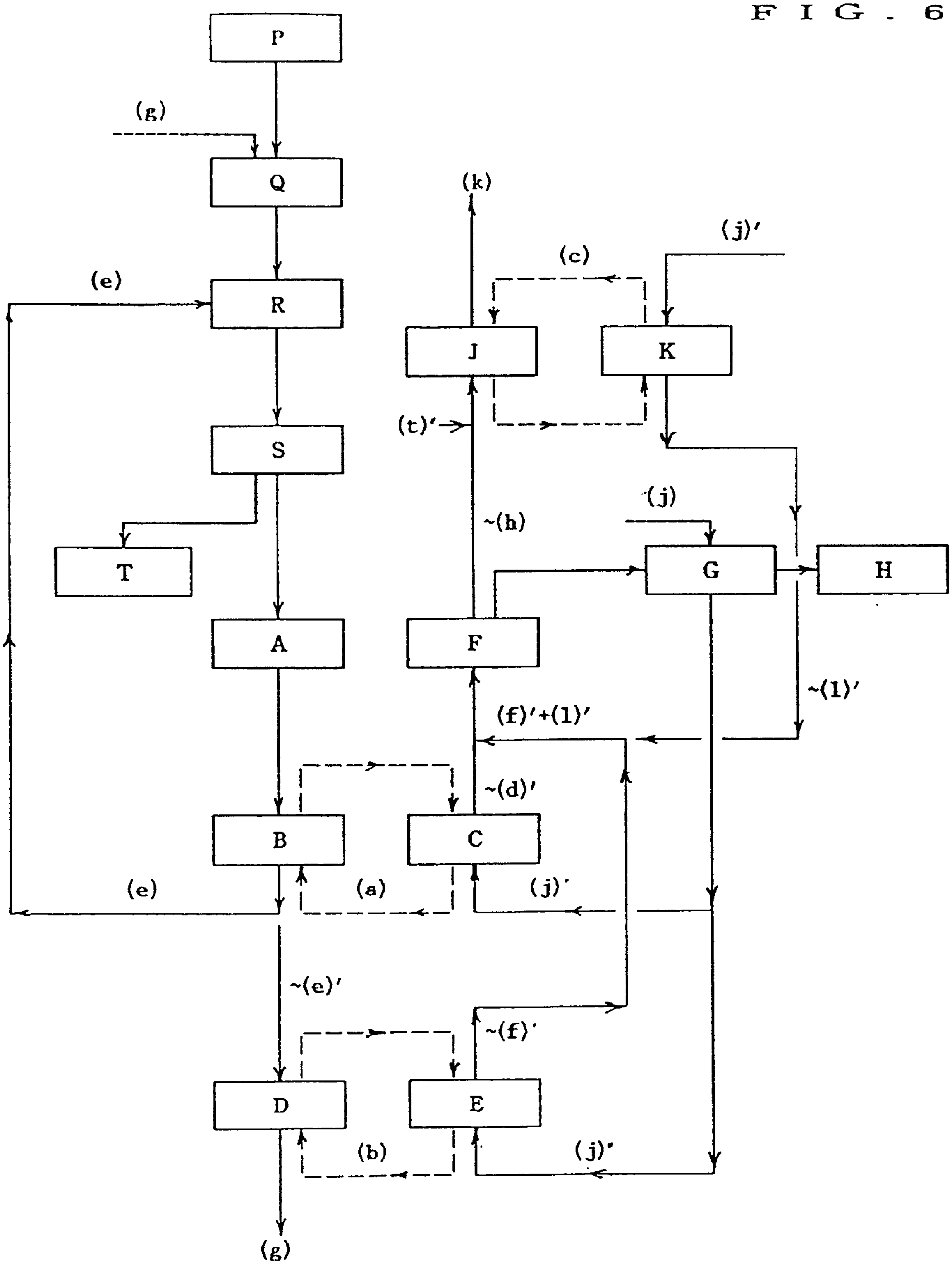

FIG. 7

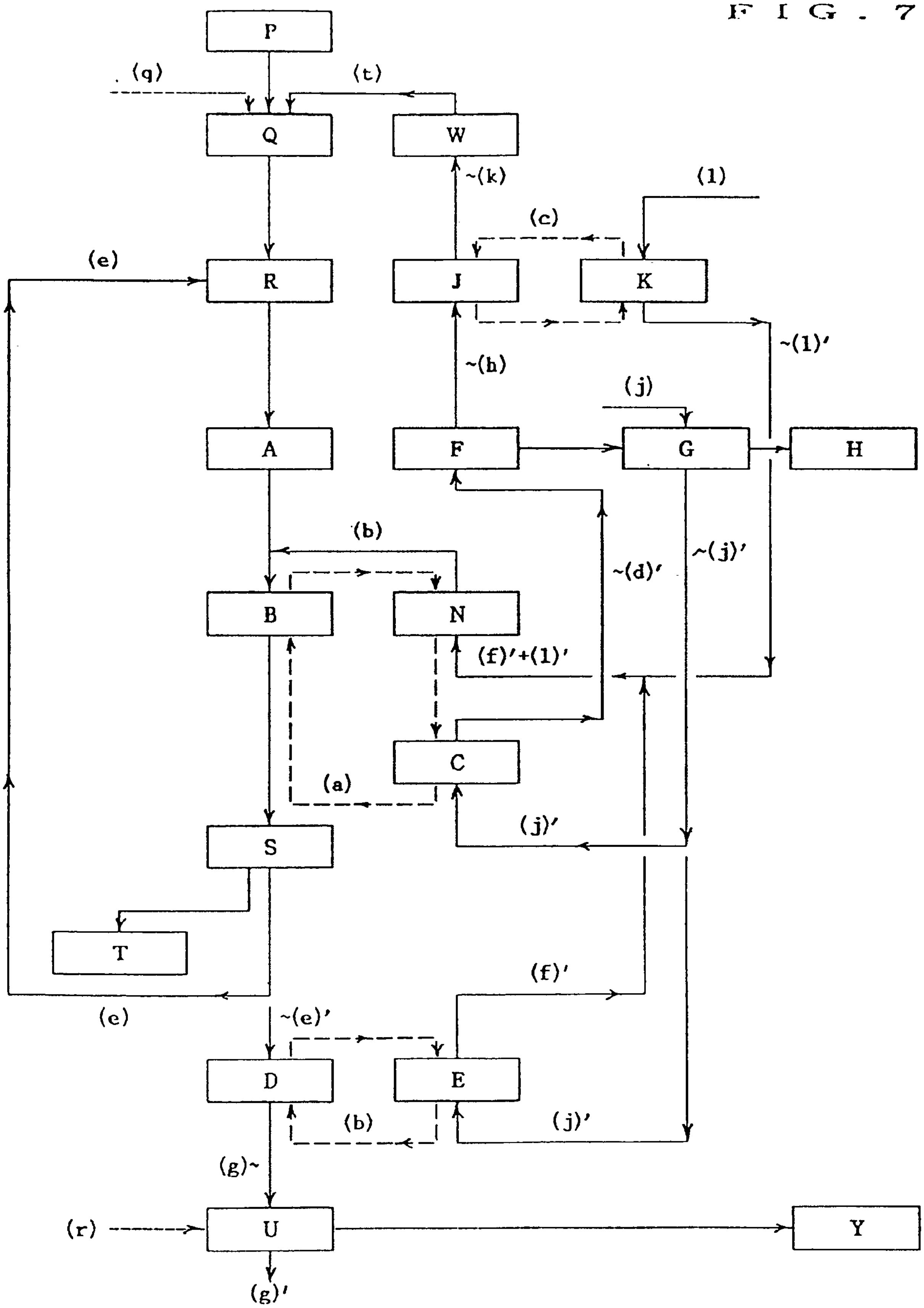

FIG. 8

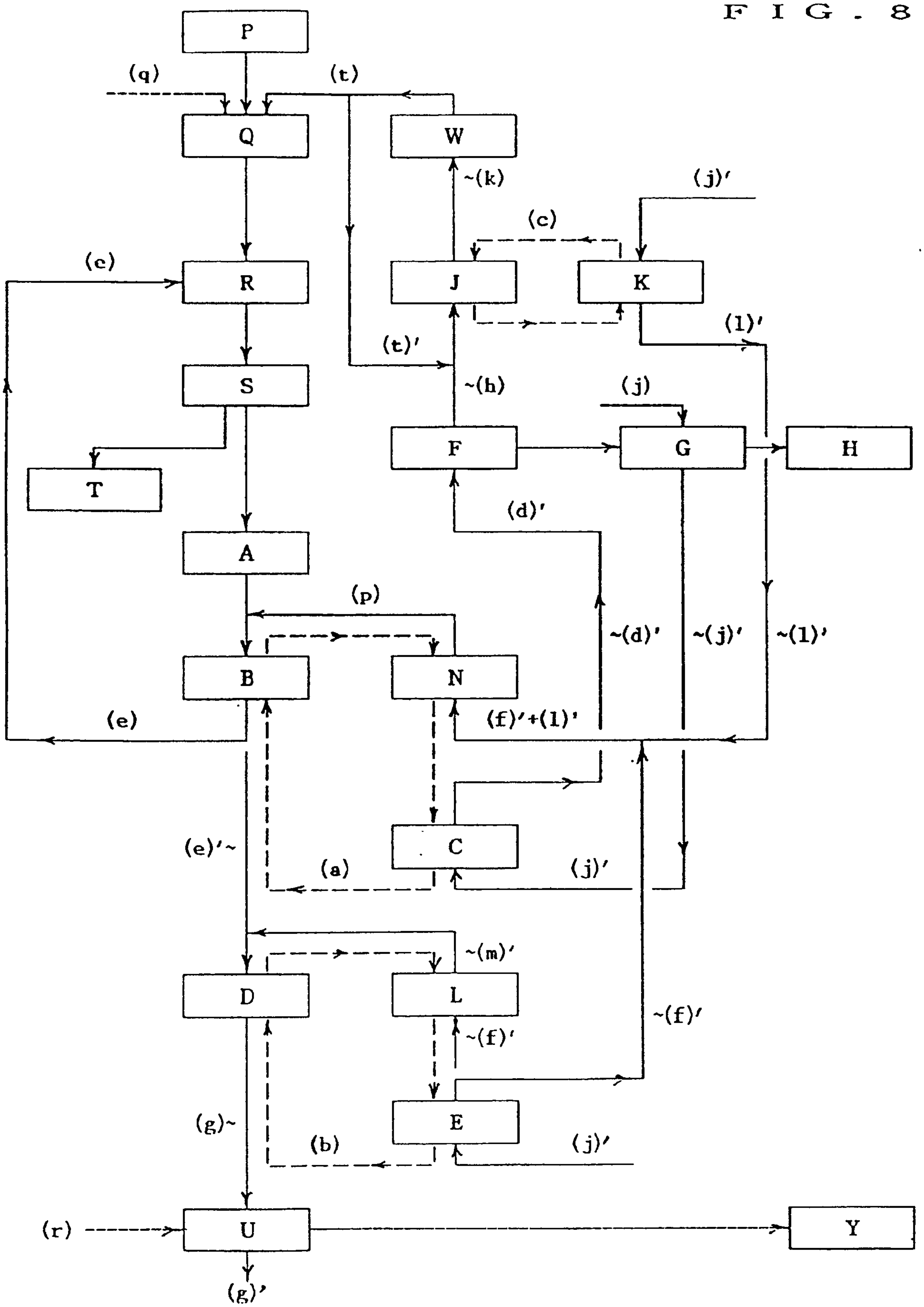

FIG. 9

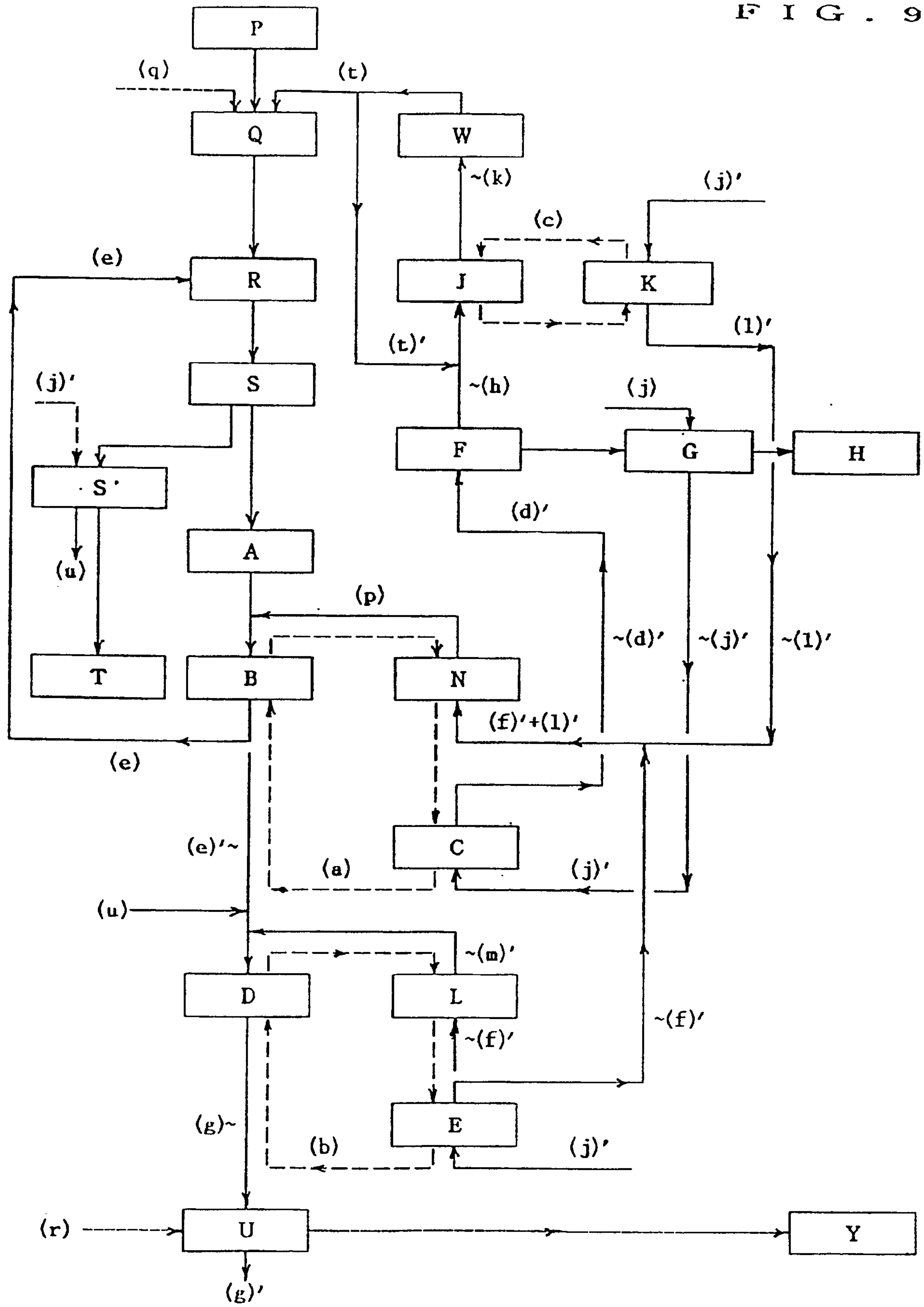
P
(q)
(t)
Q
W
~(k)
(j)'
(c)
(e)
R
J
K
(l)'
(t)'
S
~(h)
(j)'
(j)
F
G
H
S'
(d)'
A
(u)
(p)
~(d)'
~(j)'
~(l)'
T
B
N
(f)'+(l)'
(e)
(e)'~
C
(a)
(j)'
(u)
~(m)'
D
L
~(f)'
~(f)'
E
(g)~
(b)
(j)'
(r)
U
Y
(g)'